# EUROPEAN PATENT APPLICATION

(11) **EP 4 756 596 A1**
(43) Date of publication of application: **10.06.2026**
(21) Application number: 24931556.5
(22) Date of filing: 26.03.2024
(51) Int. Cl.: G06F 3/0488

(54) **METHOD FOR DISPLAYING INPUT CONTENT AND ELECTRONIC DEVICE**

(71) Applicant: Honor Device Co., Ltd., Shenzhen, Guangdong 518040 (CN)
(72) Inventor: YANG, Yuwei, Shenzhen, Guangdong 518040 (CN)
(74) Representative: Gill Jennings & Every LLP
(86) International application number: PCT/CN2024/083929
(87) International publication number: WO 2025/199770

(57) **Abstract**

This application discloses a method for displaying input content and an electronic device, and relates to the field of terminal technologies. In response to a first operation on an editing interface for a text note, a handwriting area is added to the editing interface. A user may input content to the handwriting area through handwriting. In response to a second operation of the user, the handwriting area is deleted, and a first handwriting display area of the editing interface displays the content input through handwriting. In response to a third operation on the first handwriting display area, the handwriting area is further displayed on the editing interface, and the user may continue to input content to the handwriting area through handwriting. In this period, text content on the editing interface is always displayed. Therefore, an interface jump is reduced, which brings smoother use experience to the user. In addition, before the editing interface is generated, the handwriting input content and the text content do not correspond to different layers. This avoids a display misplacement problem that is generated after a form change of a tablet computer and that is caused by a fact that the text content and the handwriting input content are located on different layers.

## Description

### TECHNICAL FIELD

Embodiments of this application relate to the field of terminal technologies, and in particular, to a method for displaying input content and an electronic device.

### BACKGROUND

Generally, terminal devices all support note applications. A user may record information such as a text, a picture, and audio by using a note application.

As functions of the note application become increasingly powerful, use experience of the note application also becomes richer. For example, in a text note of the note application, the user may input a text by using a keyboard, input content in a clipboard by copying and pasting, add a hyperlink, add a picture, audio, and the like, and may also write content such as a text or a graphic through handwriting.

It is convenient and quick to input content through handwriting, and can input a text, a graphic, and the like randomly based on user requirements, which is popular with users. However, currently, a handwriting input in the note application still has some defects. How to optimize a handwriting interaction process of the note application and improve user experience of using the note application is a problem to be resolved.

### SUMMARY

Embodiments of this application provide a method for displaying input content and an electronic device, which optimizes a display manner of handwriting input content in a note application, to improve use experience of content input through handwriting by a user.

To achieve the objective, the following technical solutions are used in embodiments of this application.

According to a first aspect, a method for displaying input content is provided, applied to an electronic device. For example, the electronic device is a terminal device. A terminal device is used as an example, and the method includes: The terminal device displays a first interface, where the first interface includes a first text area, and the first text area includes first text content; in response to a first operation on a first option on the first interface, creates a first view to display a second interface, where the second interface includes a first handwriting area and a second text area, the second text area includes the first text content, and the first view corresponds to the first handwriting area; in response to a first handwriting input in the first handwriting area, displays first handwriting input content in the first handwriting area; in response to a second operation (for example, a tapping operation on an area outside the first handwriting area on the second interface) on the second interface, deletes the first view to display a third interface, where the third interface includes a first handwriting display area and a third text area, the first handwriting display area includes the first handwriting input content, and the third text area comprises the first text content; and in response to a third operation on the first handwriting display area of the third interface, creates a second view to display a fourth interface, where the fourth interface includes the first handwriting area and the second text area, and the second view corresponds to the first handwriting area.

In the method, in response to the first operation of a user on an editing interface of a text note, a handwriting area is added to the editing interface of the text note. The user may input content to the handwriting area through handwriting. In response to the second operation of the user, for example, a tapping operation on an area outside the handwriting area, the handwriting area is deleted, and the first handwriting display area on the editing interface of the text note displays the content input by the user in the handwriting area through handwriting. In response to the third operation of the user on the first handwriting display area, the handwriting area is further displayed on the editing interface, and the user may continue to input content to the handwriting area through handwriting. In this period, the first text content is always displayed on the editing interface. This brings smooth use experience to the user, and reduces poor experience brought to the user by jumping between the editing interface and a handwriting input interface. In addition, the editing interface includes a handwriting display area and a text area, handwriting input content is displayed in the handwriting display area, and text content is displayed in the text area. Before the editing interface is generated, the handwriting input content and the text content do not correspond to different layers. This avoids a display misplacement problem that is generated after a form change of a tablet computer and that is caused by a fact that the text content and the handwriting input content are located on different layers.

In a possible implementation, in response to the second operation on the second interface, a second image is further created, where the second image corresponds to the first handwriting display area of the third interface. The first handwriting display area includes the first handwriting input content. Optionally, the second image may be a picture.

In other words, on the second interface, the first handwriting input content is stored in a form of a picture. The picture also belongs to rich text content, and is located on a same layer as other text content. In this way, a display misplacement problem caused by the fact that the handwriting input content and the content text are located on different layers can be avoided.

With reference to the first aspect, in a possible implementation, the third operation includes a second handwriting input, and in response to the second handwriting input in the first handwriting display area of the third interface, second handwriting input content is displayed in the first handwriting area of the fourth interface.

In this method, the user may directly start a handwriting input on a handwriting picture (the first handwriting display area). In response to the handwriting input of the user on the handwriting picture, the handwriting picture is deleted, and a view (the second view) corresponding to the handwriting area is created.

In a possible implementation, the fourth interface is generated based on a preset layer (that is, a transition layer, where the transition layer is drawn in advance) and a layer on which the second view is located. Optionally, the fourth interface includes the preset layer and the layer on which and the second view is located. The preset layer is located above the layer on which the second view is located. In response to the second handwriting input in the first handwriting display area of the third interface, the transition layer is set to be visible. The second handwriting input content is generated on the preset layer, and the second handwriting input content is displayed in the first handwriting area of the fourth interface.

Because the transition layer is drawn in advance and is not created only after the second handwriting input is received, the second handwriting input content drawn on the transition layer can be displayed before the second view is created. In this way, before the view corresponding to the first handwriting area of the fourth interface is successfully created, a trace corresponding to the second handwriting input can be displayed on a screen through the transition layer. Because the transition layer is drawn in advance, it takes short time to draw the second handwriting input content on the transition layer, so that a time interval between when the user performs a handwriting input and when the display displays the second handwriting input content can be effectively shortened. This improves responsiveness of a handwriting input of the user.

After the second view is created, the second view may receive an input event corresponding to a handwriting input of the user, process the input event, and generate the second handwriting input content on the layer on which the second view is located. When the second handwriting input content is generated on the layer on which the second view is located and no handwriting input is being performed, the transition layer is set to be invisible. The second handwriting input content may be displayed on the screen through the second view. Subsequently, the second view may process the input event generated by the user by performing the handwriting input in the first handwriting area, and display handwriting input content in the first handwriting area.

With reference to the first aspect, in a possible implementation, when the second interface is displayed, in response to a form change (for example, the form change includes: rotating, folding, or unfolding) of the terminal device, the first view is deleted; and after the first view is deleted, a third view is created to display a fifth interface, where the fifth interface includes a second handwriting area and a fourth text area, the third view corresponds to the second handwriting area, the second handwriting area includes the first handwriting input content, and the fourth text area includes the first text content.

In this method, when there is a form change of an editing interface (for example, the second interface) including a handwriting area, a view corresponding to the handwriting area before the form change is deleted, and a view corresponding to the handwriting area is generated again based on a screen layout after the form change. The regenerated view (the third view) is laid out based on a layout rule obtained after the form change.

In response to the form change of the terminal device, before the first view is deleted, a first image is further generated based on the first view. Optionally, the first image may be a picture. In this way, the third view may be generated based on the first image and a screen display area after which there is the form change of the terminal device. A display position and a size of the first handwriting area on the screen are recorded by using the first image.

With reference to the first aspect, in a possible implementation, in response to the form change of the electronic device when the third interface is displayed, a sixth interface is displayed, where the sixth interface includes a second handwriting display area and a fifth text area, the second handwriting display area includes the first handwriting input content, and the fifth text area includes the first text content; and no view is deleted or no view is created in a process from the form change of the electronic device to displaying the sixth interface.

In this method, the third interface includes the first handwriting display area and the third text area. After the form change of the terminal device, the sixth interface is generated by performing an interface layout on views on the third interface based on the screen display area. The first handwriting display area corresponds to the second handwriting display area, the third text area corresponds to a fifth text area, and no view is deleted or created.

With reference to the first aspect, in a possible implementation, the third operation includes a tapping operation, and the fourth interface is the same as the second interface. Optionally, the fourth interface is the same as the second interface, or the fourth interface may be the second interface. A status bar does not belong to an interface. In other words, if two interfaces are different only in status bars, it indicates that the two interfaces are the same.

In this method, the user may tap a handwriting picture (the first handwriting display area), so that the first handwriting area is displayed on the editing interface. In this way, a handwriting input can be continued to be performed in the first handwriting area.

With reference to the first aspect, in a possible implementation, the third interface further includes a third handwriting area, the third handwriting area includes third handwriting input content, the fourth interface further includes a third handwriting display area, the third handwriting display area includes the third handwriting input content. In response to the third operation on the first handwriting display area of the third interface, a third image is created, where the third image corresponds to the third handwriting display area. Optionally, the third image may be a picture.

In this method, the editing interface includes a handwriting area and a handwriting picture (a handwriting display area). In response to the third operation of the user on the handwriting picture, the handwriting area is presented in a form of the handwriting picture.

With reference to the first aspect, in a possible implementation, the first handwriting display area and the first handwriting area are a same display area on the screen.

In this method, experience that the handwriting display area and the handwriting area are a same area is brought to the user. This avoids use experience, of handwriting area jumping, brought to the user.

With reference to the first aspect, in a possible implementation, the first text content includes at least one of a text, a picture, audio, a table, and a hyperlink. In other words, the text area may include rich text content.

According to a second aspect, an electronic device is provided. The electronic device has a function of implementing the method described in the first aspect. The function may be implemented by hardware, or may be implemented by hardware by executing corresponding software. The hardware or the software includes one or more modules corresponding to the function.

According to a third aspect, an electronic device is provided, including: a processor, a memory, and a display, where the memory is configured to store computer execution instructions, and when the electronic device runs, the processor executes the computer execution instructions stored in the memory, to enable the electronic device to perform the method according to any possible implementation in the first aspect.

According to a fourth aspect, a computer-readable storage medium is provided. The computer-readable storage medium stores instructions, and when the instructions are run on a computer, a computer is enabled to perform the method according to any possible implementation in the first aspect.

According to a fifth aspect, a computer program product including instructions is provided. When the computer program product runs on a computer, the computer is enabled to perform the method according to any possible implementation in the first aspect.

For technical effects brought by any possible implementation of the second aspect to the fifth aspect, refer to the technical effects brought by different implementations of the first aspect. Details are not described herein again.

### BRIEF DESCRIPTION OF DRAWINGS

FIG. 1 is a diagram of a user interface of a note application on a tablet computer;
FIG. 2 is a diagram of a scenario instance of a handwriting interaction method in a note application;
FIG. 3 is a diagram of a scenario instance of a handwriting interaction method in a note application;
FIG. 4A is a diagram of a scenario instance of a method for displaying input content according to an embodiment of this application;
FIG. 4B is a diagram of a scenario instance of a method for displaying input content according to an embodiment of this application;
FIG. 4C is a diagram of a scenario instance of a method for displaying input content according to an embodiment of this application;
FIG. 5A is a diagram of a scenario instance of a method for displaying input content according to an embodiment of this application;
FIG. 5B is a diagram of a scenario instance of a method for displaying input content according to an embodiment of this application;
FIG. 6 is a diagram of a scenario instance of a method for displaying input content according to an embodiment of this application;
FIG. 7A is a diagram of a scenario instance of a method for displaying input content according to an embodiment of this application;
FIG. 7B is a diagram of a scenario instance of a method for displaying input content according to an embodiment of this application;
FIG. 8 is a diagram of a hardware structure of a terminal device applicable to a method for displaying input content according to an embodiment of this application;
FIG. 9 is a diagram of a software architecture of a terminal device applicable to a method for displaying input content according to an embodiment of this application;
FIG. 10A is a schematic flowchart of adding a handwriting area to an editing interface of a text note in a method for displaying input content according to an embodiment of this application;
FIG. 10B is a schematic flowchart of converting a handwriting area into a handwriting picture in a method for displaying input content according to an embodiment of this application;
FIG. 11A is a schematic flowchart of rotating of a terminal device in a method for displaying input content according to an embodiment of this application;
FIG. 11B is a diagram of an orientation of a terminal device in a method for displaying input content according to an embodiment of this application;
FIG. 12 is a schematic flowchart of a method for displaying input content according to an embodiment of this application;
FIG. 13 is a diagram of a scenario instance of a method for displaying input content according to an embodiment of this application;
FIG. 14 is a schematic flowchart of a method for displaying input content according to an embodiment of this application; and
FIG. 15 is a diagram of a structure composition of a terminal device according to an embodiment of this application.

### DESCRIPTION OF EMBODIMENTS

In descriptions of embodiments of this application, terms used in the following embodiments are only intended to describe particular embodiments, and are not intended to limit this application. As used in this specification and the claims of this application, a singular expression form, "a", "described", "foregoing", "the", or "this", is intended to also include a "one or more" expression form, unless clearly indicated to the contrary in the context. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B each may be singular or plural. The character "/" in this specification generally indicates an "or" relationship between the associated objects.

As described in this specification, referring to "one embodiment" or "some embodiments" or the like means that one or more embodiments of this application include particular features, structures, or characteristics described with reference to the embodiments. Therefore, statements, for example, "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In embodiments of this application, the term "example", "for example", or the like is used to give an example, an illustration, or a description. Any embodiment or design scheme described as "example" or "for example" in embodiments of this application should not be explained as being more preferred or having more advantages than another embodiment or design scheme. To be precise, use of the word such as "example" or "for example" is intended to present a related concept in a specific manner.

A method for displaying input content provided in embodiments of this application may be applied to an electronic device that supports a handwriting input. For example, the electronic device is a terminal device. The terminal device may include a mobile phone, a tablet computer, a notebook computer, a personal computer (personal computer, PC), an ultra-mobile personal computer (ultra-mobile personal computer, UMPC), a handheld computer, a netbook, a smart home device (such as a smart television, a smart screen, a large screen, a smart speaker, or a smart air conditioner), a personal digital assistant (personal digital assistant, PDA), a wearable device (such as a smart watch or a smart bracelet), a vehicle-mounted device, a virtual reality device, or the like. This is not limited in embodiments of this application.

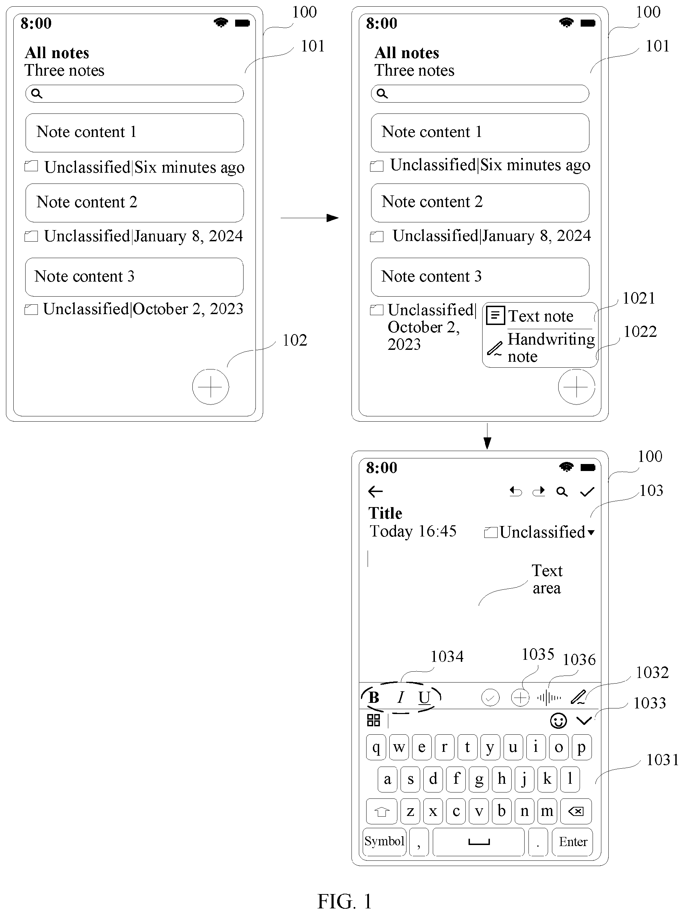

In an example, a note application is installed on the terminal device. An example in which the terminal device is a tablet computer is used. FIG. 1 is a diagram of a user interface of a note application on the tablet computer. It may be understood that on different terminal devices, the note application may have different names, for example, a notebook and a notepad.

Refer to FIG. 1. The tablet computer 100 displays a user interface 101 of the note application. The user interface 101 includes an "add" button 102. In response to a tapping operation of a user on the "add" button 102, a "Text note" option 1021, a "Handwriting note" option 1022, and the like are displayed on the user interface 101. The user may tap the "Text note" option 1021 to create a text note, and the tablet computer 100 displays an editing interface of the text note. The user may input a text, a symbol, a picture, audio, a hyperlink, or the like to the editing interface of the text note. The user may further input content (such as a text or a graphic) to the editing interface of the text note through handwriting. The user may tap the "Handwriting note" option 1022 to create a handwriting note. The user may input a text, a graphic, and the like through handwriting to a user interface (canvas) of the handwriting note.

For example, as shown in FIG. 1, in response to the tapping operation on the "Text note" option 1021, the tablet computer 100 displays an editing interface 103 of a text note. Optionally, the user may create a text note by tapping the "Text note" option 1021. The editing interface 103 includes a text area, and the user may enter rich text content such as a text, a symbol, a picture, a hyperlink, or audio in the text area. In an implementation, the editing interface 103 includes a virtual keyboard 1031, and the user may input rich text content such as a text, a number, and a symbol to the text area of the editing interface 103 by tapping a virtual key in the virtual keyboard 1031. In another implementation, the terminal device includes an input apparatus, for example, a keyboard. The user may input rich text content such as a text, a number, and a symbol to the text area of the editing interface 103 by using the keyboard.

In an implementation, the editing interface 103 includes a handwriting option 1032, and after the user taps the handwriting option 1032, a handwriting input may be performed in a handwriting area of the editing interface 103. After the tablet computer 100 receives the handwriting input of the user in the handwriting area, the handwriting area displays a handwriting stroke (such as a text, a number, a symbol, or a graphic) of the user. The handwriting stroke generated by the user through the handwriting input is reserved in the handwriting area, and does not disappear when drawing of the handwriting stroke ends.

For example, in some implementations, the editing interface 103 further includes another control. For example, the editing interface 103 further includes a "hide" button 1033. In response to a tapping operation on the "hide" button 1033, the virtual keyboard 1031 is no longer displayed on the editing interface 103. For example, the editing interface 103 further includes a text tool 1034, and the user may modify a font and the like of a text in the text area by tapping the text tool 1034. For example, the editing interface 103 further includes an "add" button 1035. In response to a tapping operation performed on the "add" button 1035 by the user, options such as "Gallery", "Table", and "Hyperlink" are displayed on the editing interface 103. The user may add a picture to the text area of the editing interface 103 by tapping the "Gallery" option; the user may add a table to the text area of the editing interface 103 by tapping the "Table" option; the user may add a hyperlink to the text area of the editing interface 103 by tapping the "Hyperlink" option, and the like. For example, the editing interface 103 further includes a "record" button 1036, and the user may add a recording file to the text area of the editing interface 103 by tapping the "record" button 1036.

A handwriting input in a text note is convenient and quick, and there are a plurality of implementations during specific implementation.

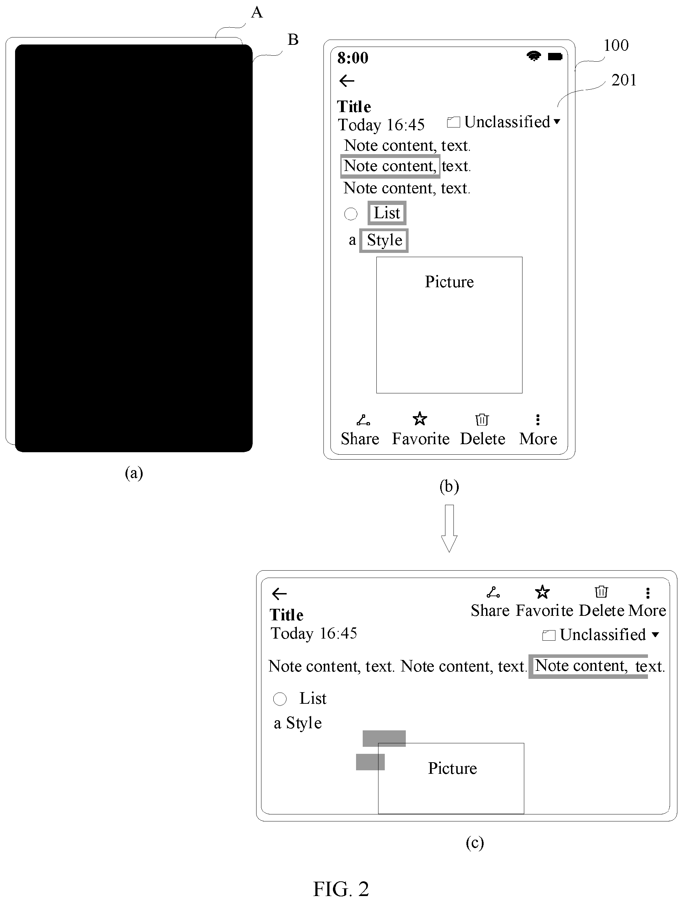

In an implementation, as shown in (a) of FIG. 2, an editing interface of a text note is generated based on at least two layers. A layer A includes rich text content such as a text, a picture, a table, and a hyperlink; and a layer B includes handwriting input content.

For example, as shown in (b) of FIG. 2, the tablet computer 100 displays an editing interface 201 of a text note. A text area of the editing interface 201 includes text content such as a text or a picture, and further includes a marked graphic input through handwriting, for example, a black shadow block in (b) of FIG. 2.

In this implementation, before the editing interface of the text note is generated based on at least two layers, handwriting input content and text content located on different layers (for example, a layer may be a View or a Layer), and the handwriting input content may be superimposed on the text content. However, when there is a form change of a terminal device, for example, a tablet computer rotates, or for example, a foldable mobile phone is folded or unfolded, a display misplacement of text content and handwriting input content may occur. For example, as shown in (b) of FIG. 2, marked graphics are located on texts "Note content", "List", and "Style". After the tablet computer rotates, as shown in (c) of FIG. 2, the marked graphics and the texts "Note content", "List", and "Style" are misplaced. The reason is that the text content and the handwriting input content are located on different layers, and the two layers are independent of each other. The tablet computer separately layouts the layers independently. In different layout manners, the text content and the handwriting input content may be misplaced.

In another implementation, the tablet computer displays an editing interface of a text note, and the user may input rich text content such as a text and audio to the editing interface. When the user needs a handwriting input, the tablet computer displays a handwriting input interface of the text note. The handwriting input interface does not include rich text content, and the user may input handwriting input content to the handwriting input interface through handwriting. After the user stops the handwriting input, the tablet computer no longer displays the handwriting input interface, and displays the updated editing interface. The updated editing interface includes a picture generated based on the input handwriting content.

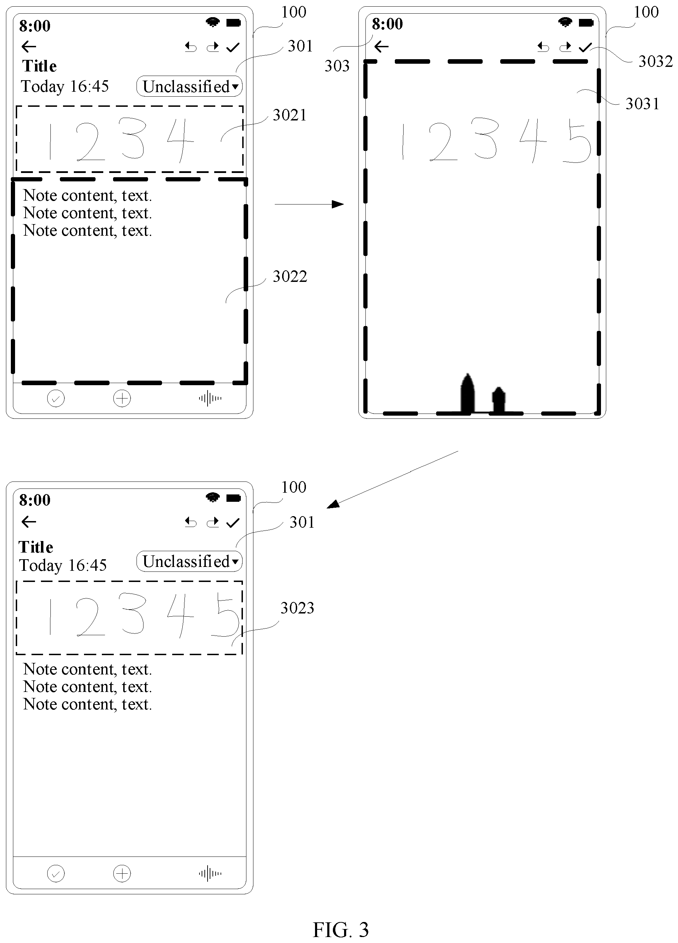

For example, as shown in FIG. 3, the tablet computer 100 displays an editing interface 301 of a text note. The editing interface 301 includes a picture 3021 and a text area 3022. Content of the picture 3021 is generated by a handwriting stroke, and the text area 3022 includes text content. In an example, in response to a tapping operation of the user on the picture 3021, the tablet computer 100 displays a handwriting input interface 303, the handwriting input interface 303 includes a handwriting area 3031, and the user may perform a handwriting input in the handwriting area 3031 of the handwriting input interface 303. As shown in FIG. 3, a size of the handwriting area 3031 is large, and almost occupies an entire display area of the handwriting input interface 303, and the handwriting input interface 303 does not include a text area.

After the user ends the handwriting input, for example, a tapping operation of the user on a "Save" button 3032 in on handwriting input interface 303 is received, the tablet computer 100 displays the updated editing interface 301. The updated editing interface 301 includes a picture 3023, and the picture 3023 is generated based on handwriting input content of the user in the handwriting area 3031. It should be noted that a dashed-line box on the editing interface 301 and the handwriting input interface 303 shown in FIG. 3 are only used for indicating an area range. During actual application, the dashed-line boxes are not displayed.

In this implementation, the handwriting input content (the handwriting stroke) is displayed on the editing interface in a form of a picture. Before the editing interface is generated, the handwriting input content and the text content are located on a same layer. This avoids a problem that the text content and the handwriting input content are misplaced when the tablet computer rotates. However, the handwriting input requires to be performed on the handwriting input interface, which causes jumping between the editing interface and the handwriting input interface, resulting in poor user experience.

An embodiment of this application provides a method for displaying input content. A handwriting input does not need to be performed on a handwriting input interface. Instead, a handwriting operation may be performed in a handwriting area of an editing interface of a text note. After the handwriting input ends, handwriting input content in the handwriting area is saved and displayed on the updated editing interface in a form of a picture. Because the handwriting input content is presented in a form of a picture, and the handwriting input content and text content are located on a same layer. This avoids a problem that the text content and the handwriting input content are misplaced when there is a form change of a tablet computer. In addition, poor experience brought to a user by jumping between the editing interface and the handwriting input interface is reduced.

In an example, the tablet computer displays an editing interface 1 of a text note. The editing interface 1 includes a text area 1. The user may input rich text content such as a text, a symbol, a picture, a table, a hyperlink, or audio to the text area 1. In response to an operation of adding a handwriting area by the user (for example, an operation of tapping a handwriting button), the tablet computer displays an editing interface 2 of the text note. The editing interface 2 includes a text area 2 and a handwriting area. The user may input rich text content such as a text, a symbol, a picture, a table, a hyperlink, or audio to the text area 2. The user may write handwriting input content in the handwriting area through handwriting. The text area 2 corresponds to the text area 1, the rich text content displayed in the text area 2 is the same as the rich text content displayed in the text area 1, starting positions of the text area 2 and the text area 1 may be different, and sizes of areas displayed in the text area 2 and the text area 1 on a screen may also be different. Optionally, an initial size (for example, a width and a height) of the handwriting area on the editing interface 2 is a preset value, and the size of the handwriting area may be dynamically adjusted based on handwriting input content. The size of the handwriting area may further be changed in response to an operation of adjusting a boundary of the handwriting area by the user. In an example, a horizontal direction is an X axis, a direction perpendicular to the ground is a Y axis, the width of the handwriting area indicates a length of the handwriting area in an X axis direction, and the height of the handwriting area indicates a length of the handwriting area in a Y axis direction.

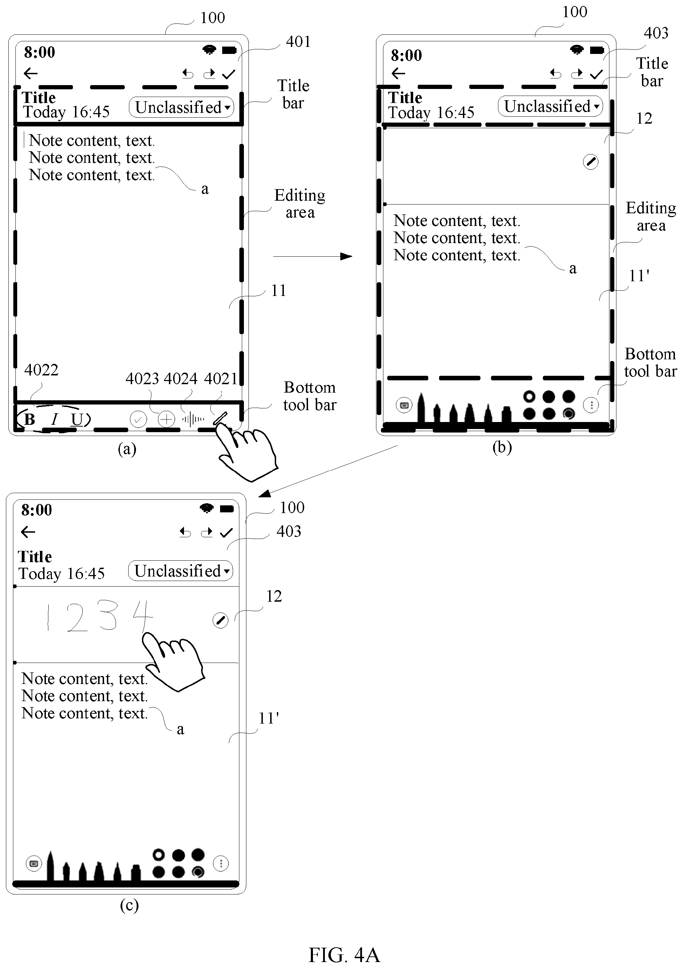

For example, as shown in (a) of FIG. 4A, a tablet computer 100 displays an editing interface 401 of a text note. The editing interface 401 includes a title bar, an editing area, a tool bar, and the like. The title bar includes a title, editing time, a classification option, and the like of the text note. On the editing interface 401, the entire editing area is a text area, for example, a text area 11. A user may input rich text content such as a text, a symbol, a picture, a table, a hyperlink, or audio to the text area 11. For example, the text area 11 includes a text a. The bottom tool bar includes a plurality of controls, for example, a handwriting option 4021, a text tool 4022, an "add" button 4023, and a "record" button 4024. It should be noted that a dashed-line box on the editing interface 401 shown in (a) of FIG. 4A is used only for indicating an area range, and is not displayed during actual application. Optionally, the editing interface 401 may be the editing interface 103 shown in FIG. 1. In this case, in response to the tapping operation of the user on the "hide" button 1033, the virtual keyboard 1031 is not displayed. The handwriting option 4021 may be the handwriting option 1032 in FIG. 1, the text tool 4022 may be the text tool 1034 in FIG. 1, the "add" button 4023 may be the "add" button 1035 in FIG. 1, and the "record" button 4024 may be the "record" button 1036 in FIG. 1.

In an example, as shown in (b) of FIG. 4A, in response to a tapping operation of the user on the handwriting option 4021, the tablet computer 100 displays an editing interface 403 of a text note. The editing interface 403 includes a title bar, an editing area, a bottom tool bar, and the like. The title bar on the editing interface 403 is the same as the title bar on the editing interface 401. The editing area includes a handwriting area 12 and a text area 11'. The user may write handwriting input content in the handwriting area 12 through handwriting, and the user may input rich text content such as a text, a symbol, a picture, a table, a hyperlink, and audio to the text area 11'. The bottom tool bar includes a handwriting tool button, and the user may tap the handwriting tool button to select a line thickness, a pen shape, a color, and the like used for a handwriting input in the handwriting area 12. In an implementation, after the user taps the "add" button 4023, the tablet computer 100 adds a View of the handwriting area 12 to a View corresponding to the editing area, to add a handwriting area to the editing area of the editing interface. Correspondingly, a display size of the text area in the editing area becomes smaller. For example, a display size of the text area 11' in (b) of FIG. 4A is smaller than a display size of the text area 11 in (a) of FIG. 4A, and the rich text content included in the text area 11' is the same as the rich text content included in the text area 11. In an implementation, a View corresponding to the text area 11' is a View of the text area 11. Optionally, on the editing interface, the handwriting tool button in the bottom tool bar and the handwriting area appear at the same time. In other words, when the editing area of the editing interface includes the handwriting area, the bottom tool bar includes the handwriting tool button.

It should be noted that a dashed-line box on the editing interface 403 shown in (b) of FIG. 4A is used only for indicating an area range, and is not displayed during actual application.

For example, as shown in (c) ofFIG. 4A, the user may input a text, a number, a graphic, and the like in the handwriting area 12 through handwriting.

After the user ends the handwriting input in the handwriting area 12, a save operation may be performed. For example, the save operation includes tapping an area outside the handwriting area on the editing interface. For example, as shown in (c) of FIG. 4A, the user taps the text area 11'.

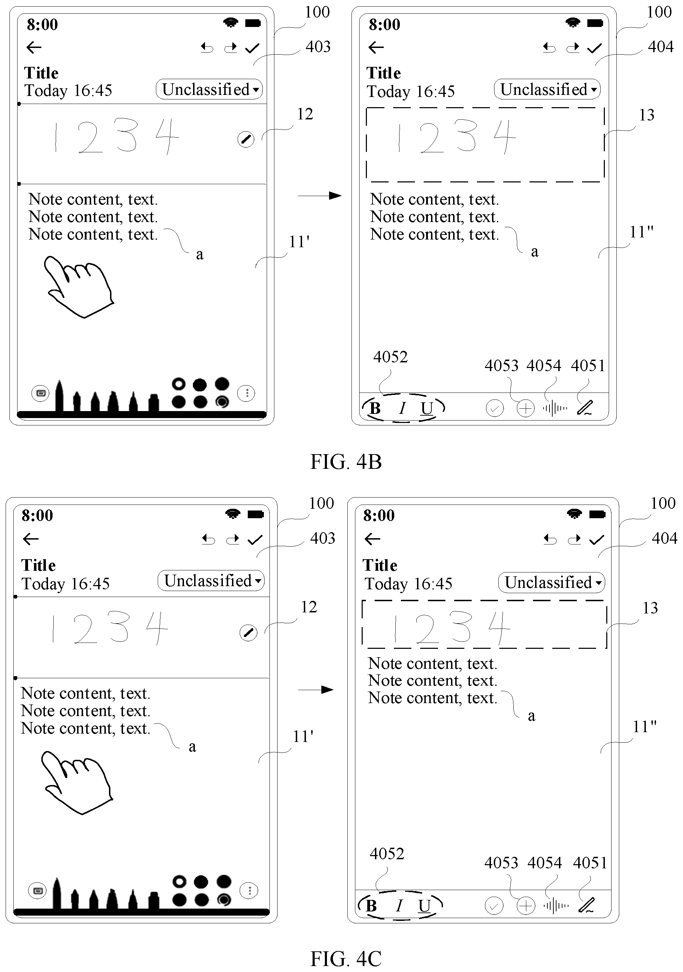

In an implementation, as shown in FIG. 4B, in response to a save operation of the user on the handwriting area 12 (for example, a tapping operation in the text area 11'), the tablet computer 100 displays an editing interface 404 of a text note. An editing area of the editing interface 404 includes a picture 13 and a text area 11". The picture 13 is generated based on the handwriting area 12. In an example, a size of the picture 13 is the same as that of the handwriting area 12, positions at which the picture 13 and the handwriting area 12 are displayed on the screen are also the same, and a display size and a display position of the text area 11" are the same as those of the text area 11'. An element in the picture 13 is generated based on the handwriting input content (a handwriting stroke) in the handwriting area 12, and the text area 11" includes a text a.

In another implementation, as shown in FIG. 4C, in response to a save operation of the user on the handwriting area 12 (for example, the tapping operation in the text area 11'), the tablet computer 100 displays an editing interface 404 of a text note. An editing area of the editing interface 404 includes the picture 13 and the text area 11". A start display position (a position of an upper-left vertex of the picture) of the picture 13 is the same as that of the handwriting area 12, and a display size of the picture 13 is different from that of the handwriting area 12. For example, a height of the picture 13 is different from a height of the handwriting area 12. For example, the handwriting input content is little in the handwriting area 12, a height covered by the handwriting stroke in the handwriting area is less than the height of the handwriting area, and the height of the picture 13 is determined based on a height of an area covered by the handwriting input content in the handwriting area. The element in the picture 13 is generated based on the handwriting input content in the handwriting area 12. Correspondingly, a height of the text area 11" is different from that of the text area 11', and the text area 11" includes the text a.

As shown in FIG. 4B and FIG. 4C, the editing interface 404 does not include a handwriting area, and correspondingly, does not include a handwriting tool button. For example, as shown in FIG. 4B and FIG. 4C, the editing interface 404 includes a handwriting option 4051, a text tool 4052, an "add" button 4053, a "record" button 4054, and the like. The handwriting option 4051 may be the handwriting option 4021 in (a) of FIG. 4A the text tool 4052 may be the text tool 4022 in (a) of FIG. 4A, the "add" button 4053 may be the "add" button 4023 in (a) of FIG. 4A, and the "record" button 4054 may be the "record" button 4024 in (a) of FIG. 4A.

For ease of description, in this embodiment of this application, a picture generated based on handwriting input content (a handwriting stroke) in a handwriting area is referred to as a handwriting picture. For example, the picture 13 is a handwriting picture. In this embodiment of this application, a display area occupied by a handwriting picture is referred to as a handwriting display area.

Optionally, in an implementation, in response to the save operation of the user on the handwriting area 12, the tablet computer 100 saves information about the handwriting stroke in the handwriting area 12. For example, the information about the handwriting stroke in the handwriting area 12 is saved in a binary file. The tablet computer 100 further determines a display position and the size of the picture 13 based on a display position and a size of the handwriting area 12. The tablet computer 100 further generates an element in the picture 13 based on the handwriting stroke in the handwriting area 12.

It may be understood that a dashed-line box on the editing interface 404 shown in FIG. 4B and FIG. 4C is only used to indicate a range of the picture 13. During actual application, the dashed-line box may not be displayed.

In this example, in a process in which the user performs a handwriting input, the editing interface of the text note is always displayed, and rich text content of the text area is always displayed on the editing interface. This brings smooth use experience to the user. In addition, handwriting input content may be saved as the element of the picture 13. The picture 13 and the text a are located on a same layer, and are not misplaced due to rotation of the tablet computer 100.

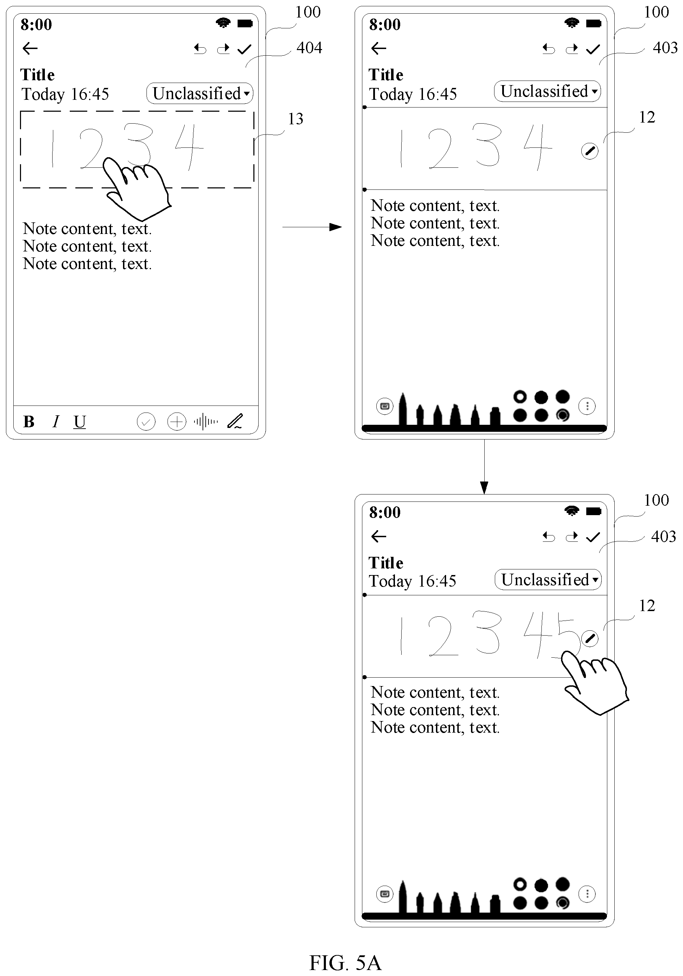

In some embodiments, the user may perform an editing operation (for example, tap the handwriting picture) on the handwriting picture, to continue to perform a handwriting input in the handwriting area. In an example, the editing operation includes a tapping operation on the handwriting picture. For example, as shown in FIG. 5A, the tablet computer 100 displays the editing interface 404. The editing interface 404 includes the picture 13. In response to a tapping operation of the user on the picture 13, the tablet computer 100 displays the editing interface 403. The picture 13 on the editing interface 404 corresponds to the handwriting area 12 on the editing interface 403. Optionally, in an implementation, after the tapping operation of the user on the picture 13 is received, the tablet computer 100 determines a position and a size of a corresponding handwriting area (the handwriting area 12) based on the display position and the size of the picture 13, and further generates a handwriting stroke of the corresponding handwriting area (the handwriting area 12) based on information about a handwriting stroke that is of a handwriting area and that is saved when the picture 13 is generated. For example, a handwriting stroke "1", "2", "3", and "4" is displayed in the handwriting area 12. The user may further continue to perform a handwriting input in the handwriting area 12. For example, in response to the handwriting input of the user in the handwriting area 12, the tablet computer 100 displays the updated editing interface 403. On the updated editing interface 403, a handwriting stroke "5" is displayed in the handwriting area 12.

In this way, user experience is: a position of a handwriting area does not change, and text content of a text area is always displayed on an editing interface. Therefore, use experience is more convenient and smooth.

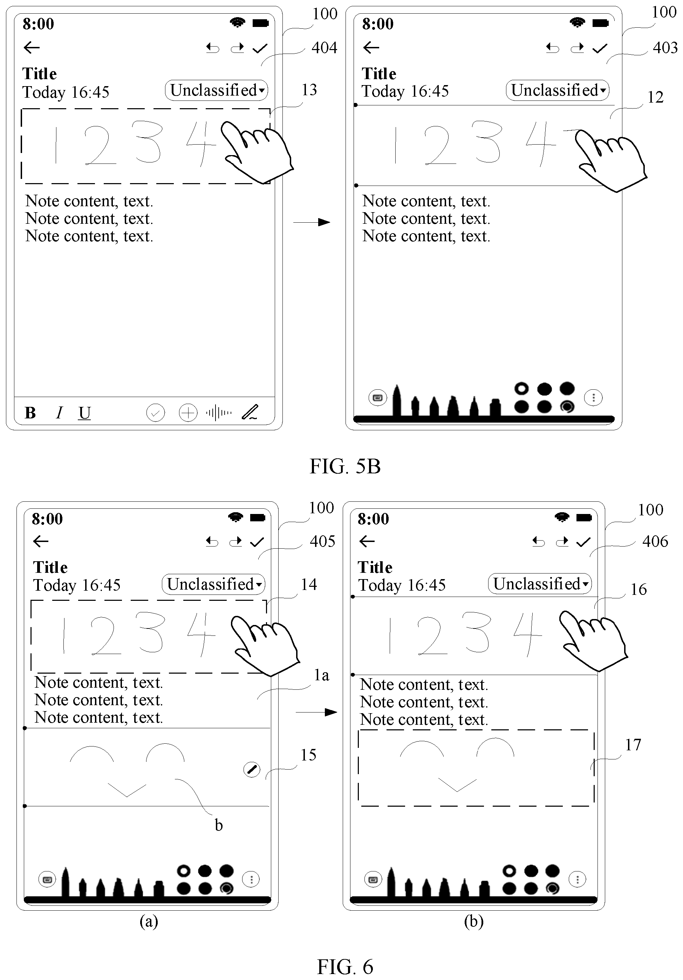

In some embodiments, the user does not need to perform an editing operation on a handwriting picture, but may directly start a handwriting input on the handwriting picture. The tablet computer receives a handwriting input of the user on the handwriting picture, deletes the handwriting picture, generates a handwriting area corresponding to the handwriting picture, and displays handwriting input content in the handwriting area. For example, as shown in FIG. 5B, the tablet computer 100 displays the editing interface 404. The editing interface 404 includes the picture 13. In response to a handwriting input of the user on the picture 13, the tablet computer 100 displays the editing interface 403, and the editing interface 403 includes the handwriting area 12.

The picture 13 corresponds to the handwriting area 12. In an example, the display position and the size of the handwriting area 12 are the same as the display position and size of the picture 13. The handwriting input content (the handwriting stroke) displayed in the handwriting area 12 includes two parts. A part of the handwriting stroke is the same as an element in the picture 13, for example, the handwriting stroke "1", "2", "3", and "4". In an implementation, the part of the handwriting stroke is generated based on the information about the handwriting stroke that is saved when the picture 13 is generated. The other part of the handwriting stroke is generated based on a handwriting input of the user on the picture 13.

In this way, the user does not need to trigger generation of a handwriting area by using an editing operation (for example, a tapping operation on a handwriting picture) first, but may directly start a handwriting input on a picture, to facilitate user writing.

In some embodiments, the tablet computer displays the editing interface 1 of the text note, and the editing interface 1 includes a handwriting picture 1 and a handwriting area 2. Optionally, the editing interface 1 further includes a text area. In response to a handwriting input of the user on the handwriting picture 1, the tablet computer displays the editing interface 2, and the editing interface 2 includes a handwriting area 1 and a picture 2. Optionally, the editing interface 2 further includes a text area. The handwriting area 1 corresponds to the picture 1, and the handwriting area 2 corresponds to the picture 2. The text content in the text area on the editing interface 2 is the same as text content in the text area on the editing interface 1.

In an example, a position and a size of the handwriting area 1 are determined based on a position and a size of the picture 1, and handwriting input content in the handwriting area 1 is generated based on a handwriting input of the user on the handwriting picture 1 and information about a handwriting stroke that is saved in the tablet computer and that is of the handwriting area 1. A display position and a size of the picture 2 are determined based on a position and a size of the handwriting area 2, and an element of the picture 2 is generated based on a handwriting stroke in the handwriting area 2.

For example, as shown in (a) of FIG. 6, the tablet computer 100 displays an editing interface 405 of a text note. The editing interface 405 includes a picture 14 and a handwriting area 15. The picture 14 is a handwriting picture, and an element of the picture 14 is generated based on handwriting input content. For example, the picture 14 is the picture 13 in FIG. 4B; In other words, the element in the picture 14 is generated based on the handwriting input content (the handwriting stroke "1", "2", "3", and "4") in the handwriting area 12, and the element in the picture 14 is the same as the handwriting stroke in the handwriting area 12. The handwriting area 15 includes a handwriting stroke b. Optionally, the editing interface 405 further includes a text area 1a.

In an example, the user performs a handwriting input on the picture 14 (or taps the picture 14), and the tablet computer 100 receives the handwriting input of the user on the picture 14 (or the operation of tapping the picture 14). For example, as shown in (b) of FIG. 6, in response to the handwriting input of the user on the picture 14 (or the operation of tapping the picture 14), the tablet computer 100 displays an editing interface 406. The editing interface 406 includes a handwriting area 16 and a picture 17.

The picture 17 is generated based on the handwriting area 15. In an example, a display position and a size of the picture 17 are determined based on a display position and a size of the handwriting area 15. For example, the display position and the size of the picture 17 are the same as the display position and the size of the handwriting area 15. An element of the picture 17 are the same as the handwriting stroke in the handwriting area 15. For example, the element in the picture 17 is the handwriting stroke b.

The handwriting area 16 is generated based on the picture 14. In an example, a size (a width and a height) of the handwriting area 16 is the same as a size (a width and a height) of the picture 14, and a display position of the handwriting area 16 is the same as a display position of the picture 14. Optionally, the handwriting area 16 is generated in response to the handwriting input of the user on the picture 14, and a handwriting stroke displayed in the handwriting area 16 is generated based on two parts of handwriting strokes. One part of the handwriting strokes is generated based on the handwriting input of the user on the picture 14, and the other part of the handwriting stroke is a handwriting stroke the same as the element in the picture 14. Optionally, the handwriting area 16 is generated in response to a tapping operation of the user on the picture 14, and the handwriting stroke displayed in the handwriting area 16 is a same handwriting stroke as the element in the picture 14.

In some embodiments, when the user uses a terminal device, there may be a form change of the terminal device, for example, a tablet computer rotates, or for example, a foldable mobile phone is folded or unfolded.

In an example, when the tablet computer displays an editing interface of a text note, the tablet computer rotates. It may be understood that, after the tablet computer rotates, the editing interface of the text note is re-laid out based on a change of a screen display area.

If the editing interface includes a handwriting area, a display position and a size of the handwriting area may change as the screen display area changes.

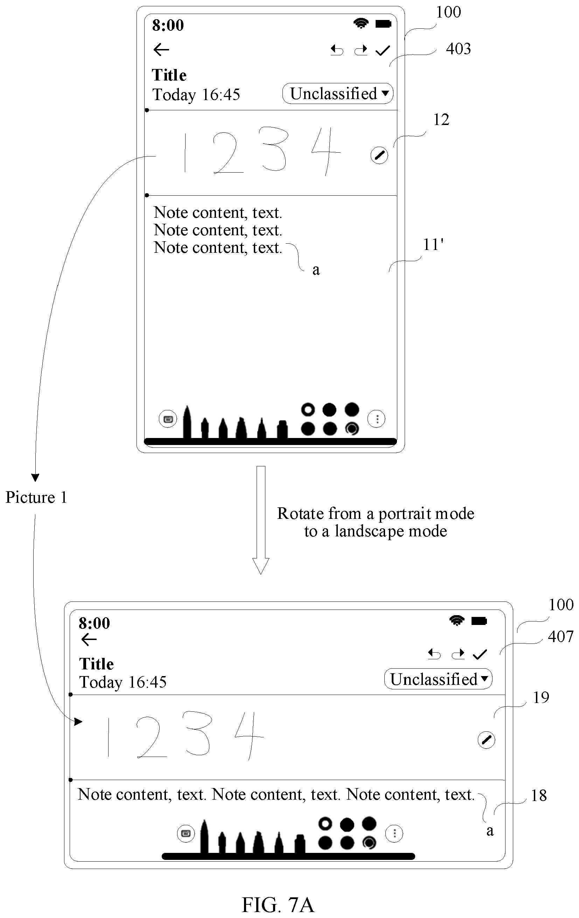

For example, as shown in FIG. 7A, the tablet computer 100 displays the editing interface 403 when the tablet computer 100 is in a portrait mode, and an editing area of the editing interface 403 includes the handwriting area 12 and the text area 11'. For example, the text area 11' includes the text a. Optionally, the title bar of the editing interface 403 includes a "Title" control, an "Unclassified" control, and the like. The bottom tool bar of the editing interface 403 includes a plurality of handwriting tool buttons and the like. The tablet computer rotates from the portrait mode to a landscape mode, and the tablet computer 100 displays an editing interface 407 in the landscape mode. In an implementation, the editing interface 407 is obtained by re-laying out the editing interface 403 based on a screen display area in the landscape mode. For example, as shown in FIG. 7A, the text area 11' on the editing interface 403 corresponds to a text area 18 on the editing interface 407, and the handwriting area 12 on the editing interface 403 corresponds to a handwriting area 19 on the editing interface 407.

Optionally, in response to the rotation of the tablet computer, when the editing interface is re-laid out, the text a, the "Title" control, the "Unclassified" control, the handwriting tool bar, and the like may be laid out by using an interface layout rule in a conventional technology.

For the handwriting area 12, in an implementation, it is detected that the tablet computer 100 starts to rotate, and the picture 1 is determined based on the position and the size of the handwriting area 12. Optionally, the position of the picture 1 on the editing interface 403 is the same as the position of the handwriting area 12 on the editing interface 403, and the size of the picture 1 is the same as the size of the handwriting area 12. In this way, the position and the size of the handwriting area 12 on the editing interface 403 may be saved by using the picture 1. For example, an upper-left vertex position of the picture 1 is determined based on the upper-left vertex position of the handwriting area 12, and a size (for example, a width and a height) of the picture 1 is determined based on a size (for example, a width and a height) of the handwriting area 12.

After it is detected that the rotation of the tablet computer 100 is completed, a position and a size of a handwriting area included in an editing interface of a text note in the landscape mode are determined based on the picture 1. In an implementation, in the landscape mode, a position of an upper-left vertex of a handwriting area (the handwriting area 19 in FIG. 7A) included in the editing interface is determined based on the position of the upper-left vertex of picture 1. It may be understood that layouts of the editing interface of the tablet computer 100 are different when the tablet computer 100 is in the portrait mode and the landscape mode. A position of the handwriting area 19 on the editing interface when the tablet computer 100 is in the landscape mode may be different from a position of the picture 1 on the editing interface when the tablet computer 100 is in the portrait mode. In an implementation, a size of the handwriting area 19 is determined based on the size of the picture 1. In an example, a height of the handwriting area 19 is the same as the height of the picture 1, and a width of the handwriting area 19 is a width of a screen display area when the tablet computer 100 is in the landscape mode. In this way, the position and the size of the handwriting area are saved by using the picture 1, and the position and the size of the handwriting area after the tablet computer rotates can be determined with reference to changes of the position and the size of the handwriting area before the tablet computer rotates and a change of the screen display area of the tablet computer. This avoids a display misplacement problem of handwriting input content after the tablet computer rotates.

In an example, the picture 1 is used for determining the position and the size of the handwriting area 19, and the picture 1 is not displayed on the screen of the tablet computer 100. For example, during the rotation of the tablet computer 100, a rotational motion effect is displayed on the screen.

In the method for displaying input content provided in this embodiment of this application, a handwriting area may be added to an editing interface of a text note, and the handwriting area may be used for receiving handwriting input content. After the user ends a handwriting input, the editing interface is updated, and the updated editing interface no longer includes the handwriting area, but displays a handwriting picture generated based on the handwriting input content in the handwriting area. In this way, if there is a form change of the terminal device, such as rotation, folding, or unfolding, the handwriting picture and rich text content (such as a text, audio, or a hyperlink) participate in a re-layout of a user interface. This avoids a misplacement problem of the handwriting input content and the rich text content. When the user performs a handwriting input on the handwriting picture again, the editing interface is updated again, and the editing interface that is updated again includes a handwriting area generated based on the handwriting picture. The handwriting picture and the handwriting area are switched at a same position, and the rich text content is always displayed on the editing interface. This brings smooth writing experience to the user.

If the editing interface includes a handwriting picture, a display position and a size of the handwriting picture may change as the screen display area changes.

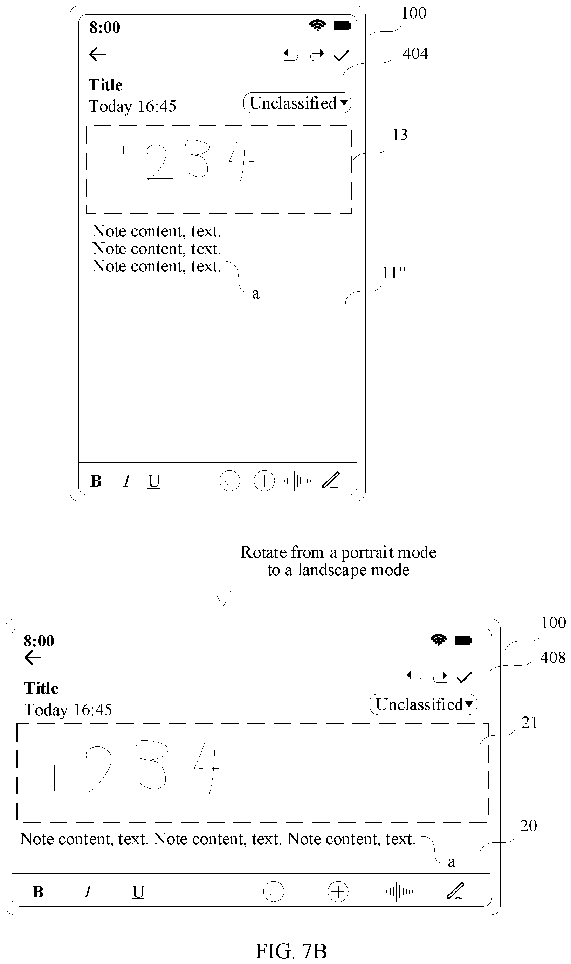

For example, as shown in FIG. 7B, the tablet computer 100 displays the editing interface 404 of the text note when the tablet computer 100 is in the portrait mode. The editing area of the editing interface 404 includes the picture 13 and the text area 11", and the text area 11" includes the text a.

The tablet computer 100 rotates from the portrait mode to the landscape mode, and the tablet computer 100 displays an editing interface 408 in the landscape mode. In an implementation, the editing interface 408 is obtained by re-laying out the editing interface 404 based on a screen display area in the landscape mode. For example, as shown in FIG. 7B, the text area 11' on the editing interface 404 corresponds to a text area 20 on the editing interface 408, and the picture 13 on the editing interface 404 corresponds to a picture 21 on the editing interface 408.

The editing interface 408 is generated by performing an interface layout on views (such as the text area 11' and the picture 13) on the editing interface 404 based on the screen display area when the tablet computer 100 is in the landscape mode. In a process in which the tablet computer 100 rotates to display the editing interface 408, no view is deleted or no view is created.

The following describes specific implementations of a method for displaying input content provided in embodiments of this application in detail with reference to the accompanying drawings.

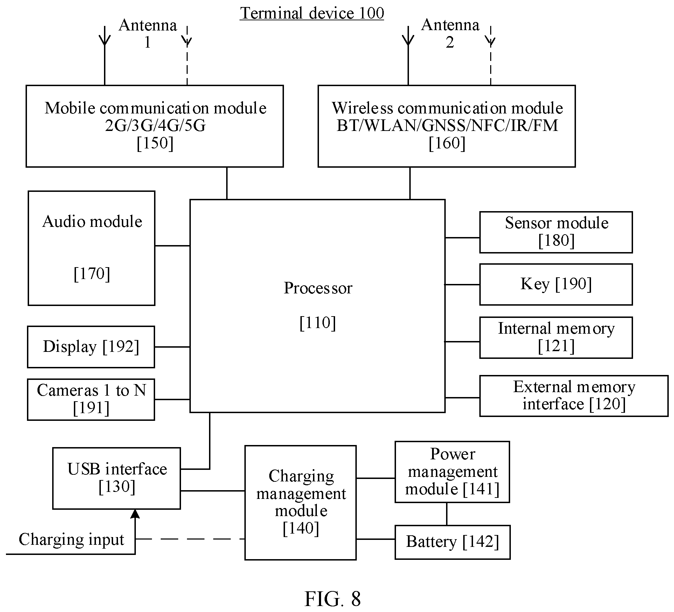

The method for displaying input content provided in embodiments of this application may be applied to a terminal device that supports a handwriting input. FIG. 8 is a diagram of a structure of a terminal device. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a key 190, a camera 191, a display 192, and the like. The sensor module 180 may include a pressure sensor, a fingerprint sensor, a temperature sensor, a touch sensor, an acceleration sensor, a gyroscope sensor, and the like.

It may be understood that the structure illustrated in this embodiment does not constitute a specific limitation on the terminal device 100. In some other embodiments, the terminal device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device 100. The controller may generate an operation control signal based on instruction operation code and a time-sequence signal, to complete control of instruction fetch and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly call the instructions or the data from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and the like.

It may be understood that an interface connection relationship between the modules shown in this embodiment is merely an example for description, and does not constitute a limitation on the structure of the terminal. In some other embodiments, the terminal device may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the terminal device. When charging the battery 142, the charging management module 140 may further supply power to the terminal device by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 192, the camera 191, the wireless communication module 160, and the like.

A wireless communication function of the terminal device 100 may be implemented through the antenna 1, the antenna 2, the mobile communication module 150, the wireless communication module 160, the modem processor, the baseband processor, and the like.

The terminal device 100 implements a display function by using the GPU, the display 192, the application processor, and the like. The GPU is a microprocessor for image processing and connects the display 192 and the application processor. The GPU is configured to perform mathematical and geometric calculation, and is configured to perform graphic rendering. The processor 110 may include one or more GPUs that execute a program instruction to generate or change display information.

The display 192 is configured to display an image, a video, or the like. The display 192 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-OLED, a micro-OLED, a quantum dot light-emitting diode (quantum dot light emitting diode, QLED), or the like.

In this embodiment of this application, the display 192 may be configured to display a user interface, for example, a desktop interface or an interface of a note application.

The terminal device 100 may implement a photographing function by using the ISP, the camera 191, the video codec, the GPU, the display 192, the application processor, and the like.

The camera 191 is configured to capture a static image or a video. In some embodiments, the terminal device may include one or N cameras 191, where N is a positive integer greater than 1.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The external memory interface 120 may be configured to connect to an external memory card such as a micro SD card, to expand a storage capability of the terminal device. The external memory card communicates with the processor 110 through the external memory interface 120, to implement a data storage function. For example, a file such as audio and a video is stored in the external memory card.

The internal memory 121 may be configured to store computer-executable program code, and the executable program code includes instructions. The processor 110 executes various functional applications and data processing of the terminal device by running the instructions stored in the internal memory 121. For example, in this embodiment of this application, the processor 110 may execute the instructions stored in the internal memory 121. The internal memory 121 may include a program storage area and a data storage area. The program storage area may store an operating system and an application required by at least one function. The data storage area may store data created during use of the terminal device. In addition, the internal memory 121 may include a high-speed random access memory, and may further include a nonvolatile memory, for example, at least one disk storage device, a flash memory device, or a universal flash storage (universal flash storage, UFS).

The pressure sensor is configured to sense a pressure signal, and can convert the pressure signal into an electrical signal. In some embodiments, the pressure sensor may be disposed on the display 192. There are a plurality of types of pressure sensors, such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The terminal device 100 determines a pressure intensity based on the change in the capacitance. When a touch operation is performed on the display 192, the terminal device 100 detects a touch operation intensity based on the pressure sensor. The terminal device 100 may also calculate a touch position based on a detection signal of the pressure sensor.

The touch sensor is also referred to as a "touch panel". The touch sensor may be disposed in the display 192. The touch sensor and the display 192 constitute a touchscreen, also referred to as a "touch screen". The touch sensor is configured to detect a touch operation performed on or near the touch sensor. The touch sensor may transfer a detected touch operation to the application processor, to determine a touch event type. A visual output related to a touch operation may be provided through the display 192.

In some embodiments, a touch operation performed by a user on a screen may be detected by using a sensor such as the pressure sensor or the touch sensor, and a text, a graphic, or the like may be generated based on the touch operation.

The acceleration sensor may detect magnitudes of accelerations of the terminal device 100 in all directions (usually on three axes). A magnitude and a direction of gravity may be detected when the terminal device 100 is static. It may be further configured to identify a posture of the terminal device, and is used in an application such as switching between a landscape mode and a portrait mode or a pedometer.

The gyroscope sensor may be configured to determine a movement posture of the terminal device 100. In some embodiments, angular velocities of the terminal device 100 around three axes (that is, x, y, and z axes) may be determined by using the gyroscope sensor.

The key 190 includes a power key, a volume key, and the like. The key 190 may be a mechanical key, or may be a touch key.

In this embodiment of this application, the terminal device is a terminal device that can run an operating system and install an application. Optionally, the operating system run by the terminal device may be an Android^{®} system, a Windows^{®} system, an iOS^{®} system, or the like.

A software system of the terminal device 100 may adopt a layered architecture, an event-driven architecture, a micro-kernel architecture, a micro-service architecture, or a cloud architecture. In this embodiment of this application, a software structure of the terminal device 100 is illustratively described by taking an Android^{®} system of a layered architecture as an example.

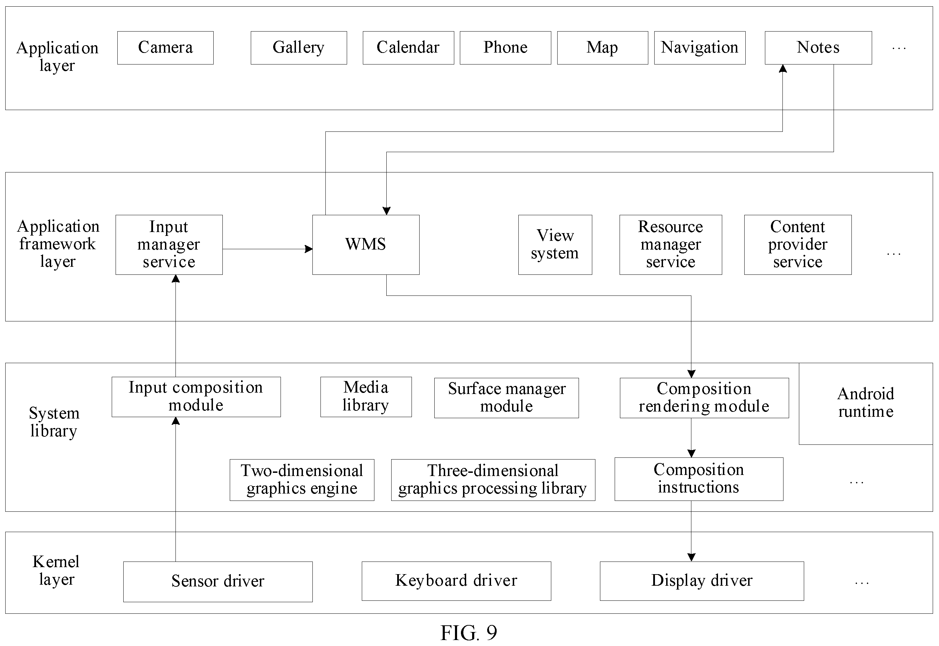

FIG. 9 is a block diagram of a software structure of the terminal device 100 according to an embodiment of this application.

In the layered architecture, software is divided into several layers, and each layer has a clear role and task. The layers communicate with each other through a software interface. In some embodiments, the Android^{®} system is divided into four layers, which are respectively an application layer, an application framework layer, an Android runtime (Android runtime) and system library, and a kernel layer from top to bottom.

The application layer may include a series of application packages, for example, applications such as Camera, Gallery, Calendar, Phone, Map, and Navigation. The application layer may include a note application.

The application framework layer provides an application programming interface (application programming interface, API) and a programming framework for the application at the application layer. The application framework layer includes some predefined functions.

As shown in FIG. 9, the application framework layer may include a window manager service (window manager service, WMS), an input manager service, a content provider service, a view system, a resource manager service, and the like.

The window manager service is configured to manage a window application, for example, adding a window, deleting a window, or modifying a window. The window manager service may obtain a size of the display, determine whether there is a status bar, perform screen locking, take a screenshot, and the like.

The input manager service is used for managing an input event, for example, distributing the input event.

The content provider service is configured to store and obtain data and make the data accessible to an application. The data may include a video, an image, audio, calls that are made and answered, a browsing history and a browsing bookmark, a phone book, and the like.

The view (View) system includes visual controls such as a control for displaying a text and a control for displaying a picture. The view system may be configured to construct an application. A display interface may include one or more views. For example, the note application includes a text note interface, which may include a view that displays a text, a view that displays a picture, and the like.

The resource manager service provides various resources for an application, for example, a localized string, an icon, a picture, a layout file, and a video file.

The Android runtime includes a kernel library and a virtual machine. The Android runtime is responsible for scheduling and management of the Android^{®} system.

The kernel library includes two parts: a function that needs to be called in Java language and a kernel library of Android.

The application layer and the application framework layer are run in the virtual machine. The virtual machine executes Java files of the application layer and the application framework layer as binary files. The virtual machine is configured to perform functions such as object life cycle management, stack management, thread management, security and exception management, and garbage collection.

The system library may include a plurality of functional modules, for example, a surface manager (surface manager) module, a composition rendering (surface flinger, SF) module, an input composition (input flinger) module, a media library (Media Library), a three-dimensional graphics processing library (for example, openGL ES), and a 2D graphics engine (for example, an SGL).

The surface manager module is configured to manage a display subsystem, and provide fusion of 2D and 3D layers for a plurality of applications.

The composition rendering module is configured to composite and render a layer based on interface display data (for example, a quantity of layers included in an interface and a display element of each layer). The composition rendering module determines, based on the display data, a composition instruction (for example, an OPENGL instruction or an HWComposer instruction) corresponding to each piece of display data, and calls the composition instruction to generate layers of an application interface and send the layers for display.

The input composition module is configured to generate a corresponding input event based on a signal generated by an input apparatus, perform event compositing, and the like.

The sensor module is configured to generate corresponding sensor data based on a signal collected by a sensor, and process the sensor data.

The media library supports playing and recording for a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes a display driver, a sensor driver, a key driver, and the like.

In an example, after a user operation on the screen of the terminal device 100 is received, the sensor driver sends an operation event corresponding to the user operation to the input composition module, the input composition module sends the operation event to the input manager service, and the input manager service sends the operation event to the WMS. The WMS determines, based on a window display position of each application, an application corresponding to the operation event. For example, if the user operation acts on a user interface (an editing interface) of the note application, the WMS sends the operation event to the note application. The note application performs corresponding processing based on the operation event, for example, updates interface data of the editing interface. The note application notifies the WMS that the interface data of the editing interface has been updated. The composition rendering module performs, based on a window management rule of the WMS, composition and rendering based on the interface data of the updated editing interface, to generate a layer of the updated editing interface; and calls a composition instruction to send the layer of the updated editing interface for display.

The following describes in detail, with reference to the functional modules in FIG. 9, a method for displaying input content provided in embodiments of this application.

In some embodiments, a handwriting area may be added to an editing interface of a text note.

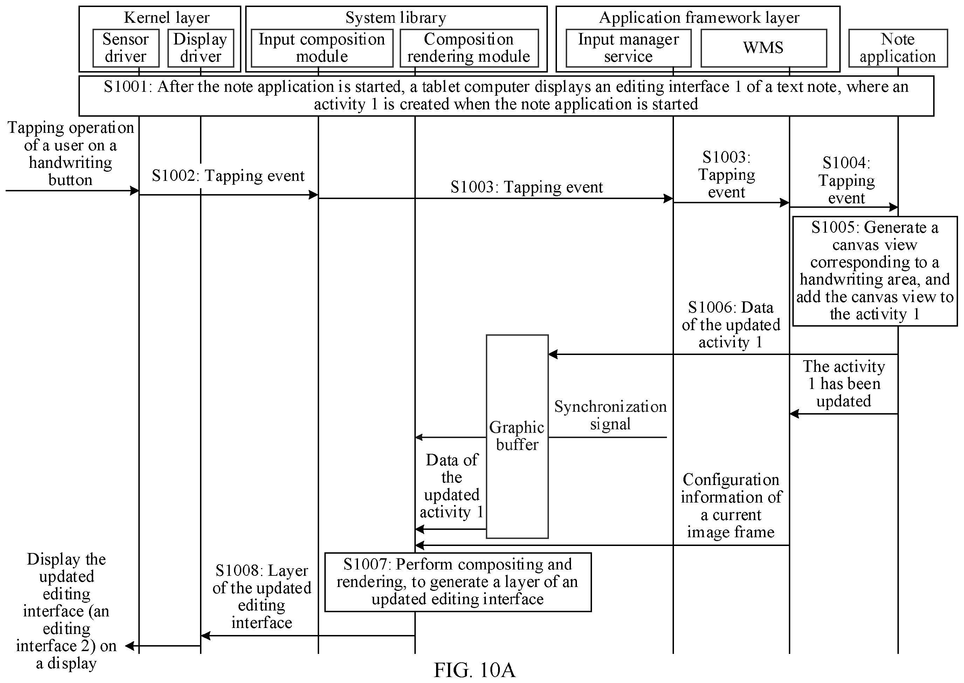

The scenario instance shown in FIG. 4A is used as an example. FIG. 10A is a schematic flowchart of adding a handwriting area to an editing interface. As shown in FIG. 10A, the method includes:

S1001: After a note application is started, a tablet computer displays an editing interface 1 of a text note, where an activity 1 (Activity 1) is created when the note application is started.

In an example, the activity 1 (Activity 1) is created when the note application is started. After the note application is started, the tablet computer displays a user interface of the note application, for example, the editing interface 1 of the text note. For example, the editing interface 1 is the editing interface 401 shown in (a) of FIG. 4A.

It may be understood that elements on the user interface of the note application are created based on a View and a ViewGroup. The View and the ViewGroup are combined by using a tree structure, to form the user interface (for example, the editing interface of the text note) of the note application.

The editing interface 401 in (a) of FIG. 4A is used as an example. A root node in a view tree structure corresponding to the activity 1 is a decorView, a child node of the decorView includes a view container (ViewContainer) 1, a child node of the ViewContainer 1 includes a web view (WebView) 1, and the WebView 1 is a view corresponding to a text area 11. Further, a child node such as an image file or an audio file may be added to the WebView 1. In this way, rich text content such as a picture or audio may be added to the text area 11.

Optionally, the child node of the ViewContainer 1 further includes a ViewGroup 1 corresponding to a title bar, a ViewGroup 2 corresponding to a bottom tool bar, and the like. For example, as shown in (a) of FIG. 4A, the bottom tool bar includes the handwriting option 4021, the text tool 4022, the "add" button 4023, the "record" button 4024, and the like. Correspondingly, a child node of the ViewGroup 2 includes a view corresponding to the handwriting option 4021, a view corresponding to the text tool 4022, a view corresponding to the "add" button 4023, a view corresponding to the "record" button 4024, and the like.

S1002: In response to a tapping operation of a user on a handwriting button, a sensor driver sends a tapping event to an input composition module.

The bottom tool bar of the editing interface 401 includes the handwriting option 4021. The user may tap the handwriting option 4021 to create a handwriting area on the editing interface 401.

In an example, a sensor (such as a touch sensor or a touch panel) detects a tapping operation of the user on a screen, the sensor driver generates a tapping event based on the tapping operation, and reports the tapping event to the input composition module. Optionally, the tapping event includes an acting position of the tapping operation, an acting intensity of the tapping operation, and the like. It may be understood that the tapping operation include a down operation and an up operation. In an implementation, the sensor driver generates a down event based on a down operation, and generates an up event based on an up operation. That the sensor driver sends the tapping event to the input composition module includes sending the down event and the up event.

S1003: The input composition module sends the tapping event to an input manager service, and the input manager service sends the tapping event to a WMS.

S1004: The WMS sends the tapping event to the note application.

In an implementation, the WMS determines, based on a window in which a focus is currently obtained, that a foreground application is the note application, and sends the tapping event to the note application for processing.

S1005: The note application generates a canvas view (HandView) corresponding to the handwriting area, and adds the canvas view (HandView) to the activity 1 (Activity 1).

In an implementation, the note application receives the tapping event, obtains the acting position of the tapping operation, the acting intensity of the tapping operation, and the like based on the tapping event. For example, the tapping event is distributed to the view corresponding to the handwriting option 4021 layer by layer along a view tree. The view corresponding to the handwriting option 4021 completes consumption of the tapping event.

In an example, the consumption of the tapping event includes: generating a canvas view (HandView), and adding the canvas view (HandView) to the ViewContainer 1. In this way, the child node of the ViewContainer 1 includes the WebView 1, the canvas view (HandView), and the like. The WebView 1 corresponds to the text area 11, and the canvas view (HandView) corresponds to a handwriting area 12. Optionally, a display position of the HandView is determined based on a position of a cursor on the display, and a size of the HandView is a preset value. It may be understood that a view includes a HandView, a WebView, and the like. That is, the HandView is a view.

Optionally, in an implementation, corresponding to generation of the HandView, an image file 1 is further generated. The image file 1 includes information about a picture 1, for example, a size of the picture 1 or an element of the picture 1. For example, the size of the picture 1 is the same as a display size of the HandView, and the element of the picture 1 is empty (that is, the picture 1 is a blank image). The image file 1 is added to the WebView 1, so that a blank picture is added to the text area. A size of the blank picture is the same as the display size of the HandView. A display position of the blank picture is also the same as the display position of the HandView. In this way, as the handwriting area is added to an editing area, a display position of a text in the text area is changed. For example, as shown in (b) of FIG. 4A, after the handwriting area 12 is added to the editing area, a display position of the text a moves downward.

S1006: The note application stores data of the updated activity 1 (Activity 1) in a graphic buffer (Graphic Buffer) of a system library, and notifies the WMS that the activity 1 (Activity 1) has been updated.

In an implementation, the note application transmits the data of the updated activity 1 to the graphic buffer of the system library by using ViewRootlmpl.java, that is, stores the data of the updated activity 1 in the graphic buffer of the system library.

The note application further notifies the WMS that the activity 1 has been updated.

S1007: When a next synchronization signal (Vsync) arrives, a composition rendering module obtains configuration information of a current image frame from the WMS, and performs compositing and rendering based on the configuration information and according to the data, which is stored in the graphic buffer (Graphic Buffer), of the updated activity 1 (Activity 1), to generate a layer of an updated editing interface.

S1008: The composition rendering module sends the layer of the updated editing interface to a display driver, and the display driver displays the updated editing interface (an editing interface 2) on the display based on the layer of the updated editing interface.

For example, the editing interface 2 is the editing interface 403 shown in (b) of FIG. 4A.

In some embodiments, after the user ends a handwriting input in the handwriting area, the handwriting area is saved on the editing interface in a form of a picture.

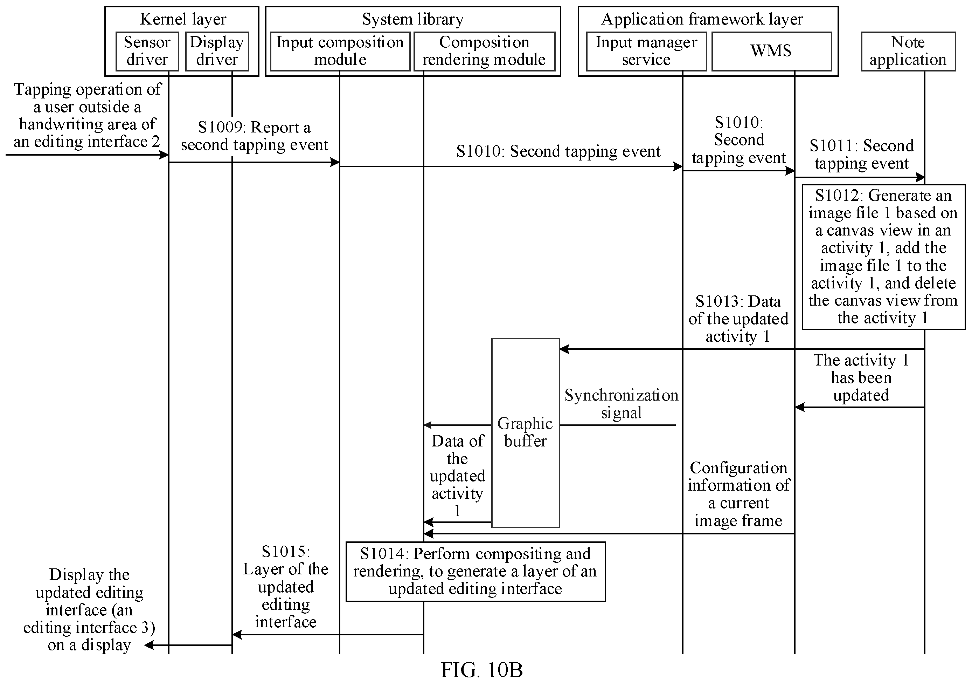

For example, as shown in FIG. 10B, the method further includes:

S1009: In response to a tapping operation of the user outside a handwriting area of the editing interface 2, the sensor driver reports a second tapping event to the input composition module.

For example, as shown in FIG. 4B, the tablet computer 100 displays the editing interface 403, and the editing interface 403 includes the handwriting area 12. The touch sensor detects the tapping operation of the user on the display, and the tapping operation acts on an area outside the handwriting area 12 on the editing interface 403.

The sensor driver generates the second tapping event based on the tapping operation, and reports the second tapping event to the input composition module. Optionally, the second tapping event includes an acting position of the tapping operation, an acting intensity of the tapping operation, and the like. It may be understood that the tapping operation include a down operation and an up operation. In an implementation, the sensor driver generates a down event based on the down operation, and generates an up event based on the up operation. That the sensor driver reports the second tapping event to the input composition module includes sending the down event and the up event.

S1010: The input composition module sends the second tapping event to the input manager service, and the input manager service sends the second tapping event to the WMS.

S1011: The WMS sends the second tapping event to the note application.

S1012: The note application generates the image file 1 based on the canvas view (HandView) in the activity 1 (Activity 1), adds the image file 1 to the activity 1 (Activity 1), and deletes the canvas view (HandView) from the activity 1 (Activity 1).

The note application generates the image file 1 based on the canvas view (HandView) in the activity 1 (Activity 1). The image file 1 includes the information about the picture 1, for example, the size of the picture 1 and the element of the picture 1. For example, the image file is in a JPG format.

In an example, the size of the picture 1 is the same as the display size of the HandView, and the element of the picture 1 is generated based on a handwriting stroke on the HandView. For example, as shown in FIG. 4B, the canvas view (HandView) is a view corresponding to the handwriting area 12, the picture 1 is the picture 13, a size of the picture 13 is the same as that of the handwriting area 12, and an element of the picture 13 is a handwriting stroke in the handwriting area 12.

The image file 1 is added to the WebView 1, so that the picture 1 is added to the text area. The size of the picture 1 is the same as the display size of the HandView, and the display position of the picture 1 is also the same as the display position of the HandView. Optionally, a blank picture in the WebView 1 is deleted. Further, the HandView is deleted from the ViewContainer 1. In this way, that the handwriting area of the editing interface is replaced with the picture 1 is implemented.

In an implementation, before the HandView is deleted, a binary file is generated based on the handwriting stroke on the HandView, and the binary file stores information about the handwriting stroke on the HandView. In this way, when the handwriting area is subsequently restored on the editing interface, the handwriting stroke in the handwriting area may be restored based on the binary file.

S1013: The note application stores the data of the updated activity 1 (Activity 1) in the graphic buffer (Graphic Buffer) of the system library, and notifies the WMS that the activity 1 (Activity 1) has been updated.

S1014: When a next synchronization signal (Vsync) arrives, the composition rendering module obtains the configuration information of the current image frame from the WMS, and performs compositing and rendering based on the configuration information and according to the data, which is stored in the graphic buffer (Graphic Buffer), of the updated activity 1 (Activity 1), to generate a layer of an updated editing interface.

S1015: The composition rendering module sends the layer of the updated editing interface to the display driver, and the display driver displays the updated editing interface (an editing interface 3) on the display based on the layer of the updated editing interface.

For example, the editing interface 3 is the editing interface 404 shown in FIG. 4B.

In some embodiments, after a form change, such as rotation, folding, and unfolding, of a terminal device, a user interface is re-laid out, and a display position of each control on an editing interface, such as a text, a picture, and a handwriting area, may be changed based on a screen display area after the form change.

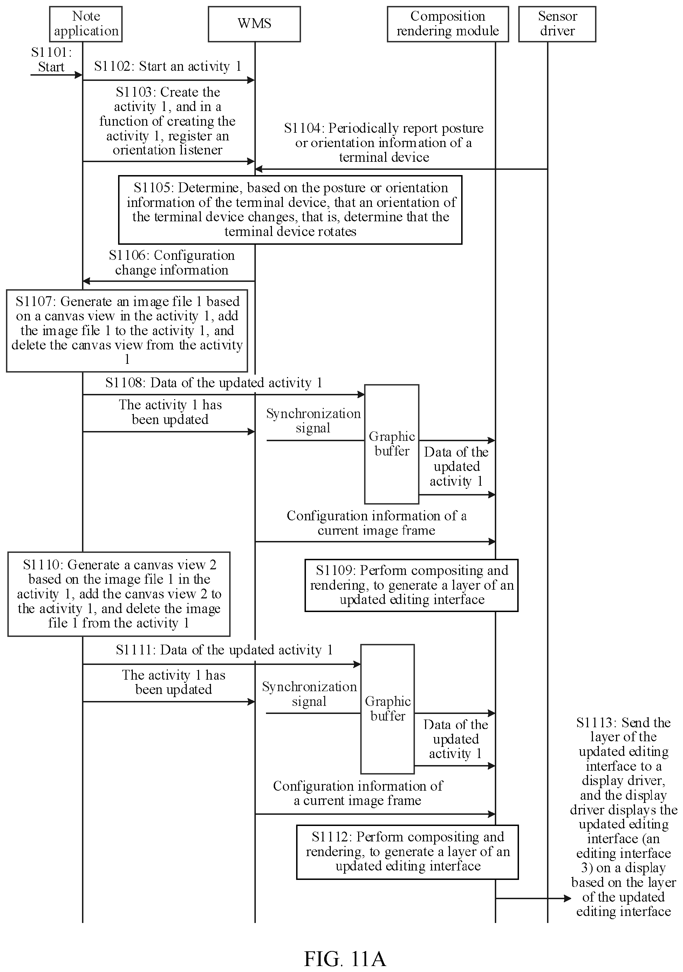

For example, FIG. 11A is a schematic flowchart of rotating of a terminal device in a method for displaying input content according to an embodiment of this application. As shown in FIG. 11A, the method includes:
S1101: Start a note application.

In an example, in response to a tapping operation of a user on an application icon, the note application is started.

S1102: The note application notifies a WMS to start an activity (startActivity) 1.

In an implementation, the note application calls the function startActivity to send a notification to the WMS, to start the activity 1 (Activity 1).

S1103: The note application notifies the WMS to create the activity 1, and in a function of creating the activity (onCreate) 1, the note application registers an orientation listener with the WMS.

In an example, the note application calls the function onCreate, to notify the WMS to create the activity 1 (Activity 1).

In an implementation, in onCreate, the note application registers the orientation listener (onOrientationChangeListener) with the WMS. After the orientation listener is registered, the WMS sends notification information to the note application after an orientation of the terminal device changes.

Optionally, in some other embodiments, the note application registers a posture listener with the WMS. The WMS sends notification information to the note application after a posture of the terminal device changes.

S1104: A sensor driver periodically reports posture or orientation information of the terminal device to the WMS.

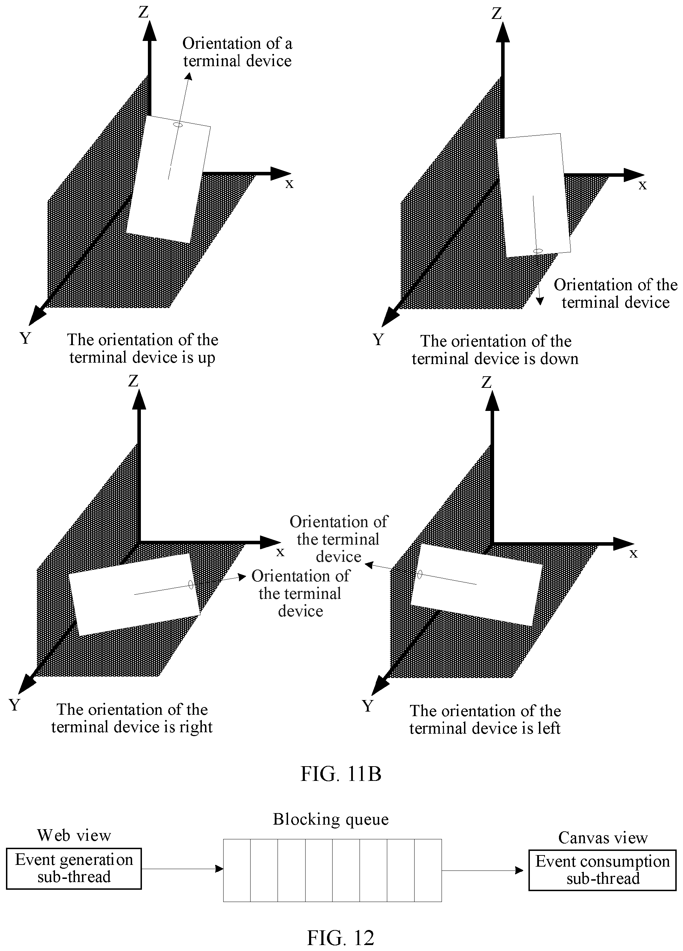

In one implementation, the orientation of the terminal device includes up, down, left, and right. An orientation of a head (a part provided with a camera) of the terminal device is used as the orientation of the terminal device. For example, as shown in FIG. 11B, an X axis, a Y axis, and a Z axis of a geodetic coordinate system are used as reference, where a positive direction of the X axis points to east, a positive direction of the Y axis points to north, and a positive direction of the Z axis, the positive direction of the X axis, and the positive direction of the Y axis satisfy a right-hand rule. When an included angle between the orientation of the terminal device and the positive direction of the Z axis is less than a preset threshold, the orientation of the terminal device is up; when an included angle between the orientation of the terminal device and a negative direction of the Z axis is less than the preset threshold, the orientation of the terminal device is down; when an included angle between the orientation of the terminal device and the positive direction of the X axis is less than the preset threshold, the orientation of the terminal device is right; and when an included angle between the orientation of the terminal device and a negative direction of the X axis is less than the preset threshold, the orientation of the terminal device is left.

For example, the orientation of the terminal device may be indicated by using an orientation flag, where an orientation flag 0 indicates up, an orientation flag 1 indicates right, an orientation flag 2 indicates down, and an orientation flag 3 indicates left.

Optionally, the orientation of the terminal device may be determined based on the posture of the terminal device.

In an implementation, the sensor driver periodically reports the posture information of the terminal device to the window manager service (WMS).

In an implementation, the sensor driver determines the orientation of the terminal device based on the posture of the terminal device, and the sensor driver periodically reports the orientation (Orientation) information of the terminal device to the window manager service (WMS).

S1105: The WMS determines, based on the posture or orientation information of the terminal device, that the orientation of the terminal device changes, that is, determines that the terminal device rotates.

In an implementation, the WMS receives the posture information of the terminal device, and determines the orientation of the terminal device based on the posture information.

In an implementation, if determining that orientation information received at current time is different from orientation information received at previous time, the WMS determines that the terminal device rotates.

S1106: After determining that the terminal device rotates, the WMS sends configuration change information to the note application.

Because the note application has registered the orientation listener with the window manager service, after it is determined that the terminal device rotates, the window manager service sends the configuration change information to the note application. In an example, the WMS call a function onConfigureChanged(), to send the configuration change information to the note application, where the configuration change information carries the current orientation information of the terminal device.

In this case, the terminal device displays an editing interface 2 of a text note. For example, as shown in FIG. 7A, the editing interface 2 is the editing interface 403, and the editing interface 403 includes the handwriting area 12. In this case, the Activity 1 includes a canvas view (HandView).

S1107: The note application generates an image file 1 based on the canvas view (HandView) in the activity 1 (Activity 1), adds the image file 1 to the activity 1 (Activity 1), and deletes the canvas view (HandView) from the activity 1 (Activity 1).

For a specific implementation of the note application, refer to related descriptions of S1012. Details are not described herein again.

S1108: The note application stores data of the updated activity 1 (Activity 1) in a graphic buffer (Graphic Buffer) of a system library, and notifies the WMS that the activity 1 (Activity 1) has been updated.

S1109: When a next synchronization signal (Vsync) arrives, a composition rendering module obtains configuration information of a current image frame from the WMS, and performs compositing and rendering based on the configuration information and according to the data, which is stored in the graphic buffer (Graphic Buffer), of the updated activity 1 (Activity 1), to generate a layer of an updated editing interface.

Optionally, during the rotation of the terminal device, a layer of the editing interface is not displayed on a screen of the terminal device, and the rotational motion effect is displayed. For example, the rotational motion effect may be a motion effect generated based on a screenshot of a screen display interface when the terminal device starts to rotate. In an example, a layer of the rotational motion effect is displayed above the layer of the editing interface.

S1110: The note application generates a canvas view 2 (HandView 2) based on the image file 1 in the activity 1 (Activity 1), adds the canvas view 2 to the activity 1 (Activity 1), and deletes the image file 1 from the activity 1 (Activity 1).

It may be understood that after the terminal device rotates, the orientation and a screen display area of the terminal device change accordingly. The note application re-layouts the activity 1 based on an interface layout rule corresponding to a current orientation of the terminal device. For example, the editing interface 403 includes the text area 11, the handwriting area 12, the title bar, the bottom tool bar, and the like. Correspondingly, the activity 1 includes a WebView 1, the image file 1, a ViewGroup 1 corresponding to the title bar, a ViewGroup 2 corresponding to the bottom tool bar, and the like. The Web View 1, the ViewGroup 1 corresponding to the title bar, the ViewGroup 2 corresponding to the bottom tool bar, and the like may be re-laid out based on an interface layout rule of the terminal device after being rotated and by using a solution in a conventional technology. Details are not described in this embodiment of this application again.

For the image file 1, the image file 1 includes information about a picture 1, for example, a display position and a size of the picture 1. The display position and the size of the picture 1 are determined based on a display position and a size of the handwriting area 12. In an implementation, the note application generates the canvas view 2 (HandView 2), and the HandView 2 corresponds to a handwriting area of the terminal device after being rotated. In an example, a display position and a size of the HandView 2 are determined based on the display position and the size of picture 1. For example, a position of an upper-left vertex of the picture 1 is determined as a display position of an upper-left vertex of the HandView 2, and a height of the picture 1 is determined as a height of the HandView 2. In an example, a handwriting stroke on the HandView 2 is generated based on information about a saved handwriting stroke on the HandView. In this way, the display position, the size, and display content (the handwriting stroke) of the HandView 2 are determined.

Further, the HandView 2 is added to a ViewContainer 1 of the activity 1. In this way, a child node of the ViewContainer 1 includes the WebView 1, the canvas view 2 (HandView 2), and the like.

Optionally, the image file 1 is deleted, and the information about the saved handwriting stroke on the HandView is deleted.

S1111: The note application stores the data of the updated activity 1 (Activity 1) in the graphic buffer (Graphic Buffer) of the system library, and notifies the WMS that the activity 1 (Activity 1) has been updated.

S1112: When a next synchronization signal (Vsync) arrives, the composition rendering module obtains the configuration information of the current image frame from the WMS, and performs compositing and rendering based on the configuration information and according to the data, which is stored in the graphic buffer (Graphic Buffer), of the updated activity 1 (Activity 1), to generate a layer of an updated editing interface.

S1113: The composition rendering module sends the layer of the updated editing interface to a display driver, and the display driver displays the updated editing interface (an editing interface 3) on the display based on the layer of the updated editing interface.

For example, as shown in FIG. 7A, after the rotation of the tablet computer 100 ends, the editing interface 407 (the editing interface 3) is displayed, and the editing interface 407 includes the handwriting area 19 (HandView 2). The handwriting area 19 is a handwriting area corresponding to the handwriting area 12.

In some embodiments, when the handwriting area is displayed on the editing interface in a form of a picture, the editing interface is updated in response to a handwriting input of the user in the handwriting area (in the form of a picture), and a handwriting picture is replaced with an editable handwriting area. For example, as shown in FIG. 5B, the tablet computer 100 displays the editing interface 404. The editing interface 404 includes the picture 13. In response to the handwriting input of the user on the picture 13, the tablet computer 100 displays the editing interface 403, and the editing interface 403 includes the handwriting area 12. For example, as shown in FIG. 6, the tablet computer 100 displays the editing interface 405. The editing interface 405 includes the picture 14, and further includes the handwriting area 15. In response to the handwriting input of the user on the picture 14, the tablet computer 100 displays the editing interface 406, and the editing interface 406 includes the handwriting area 16 and the picture 17. The handwriting area 16 corresponds to the picture 14, and the picture 17 corresponds to the handwriting area 15.

When the handwriting area on the editing interface is displayed in a form of a picture, the user may directly start a handwriting input in the handwriting area (a handwriting picture) in the form of a picture. In response to the handwriting input of the user in the handwriting area in the form of a picture, the terminal device updates the editing interface, and the updated editing interface includes the handwriting area corresponding to the handwriting picture.

In an example, before an editing interface is updated, a text area of the editing interface includes the picture 1 (for example, the picture 13), and the picture 1 is a handwriting picture. Correspondingly, the ViewContainer 1 in the activity 1 includes the WebView 1, the WebView 1 includes the image file 1, and the image file 1 includes the information about the picture 1. In response to the handwriting input of the user on the picture 1, the editing interface is updated. After the editing interface is updated, the picture 1 is deleted, and the handwriting area is added. Correspondingly, the image file 1 in the WebView 1 of activity 1 is deleted, and a HandView is added to the ViewContainer 1. The HandView is a view corresponding to the handwriting area.

Before updating of the editing interface is completed, the handwriting area is not generated yet, that is, no HandView is added to the ViewContainer 1, and the canvas view (HandView) corresponding to the handwriting area does not receive an input event corresponding to the handwriting input. In this way, a 1^{st} stroke of the handwriting input is lost, and the 1^{st} stroke of the handwriting input cannot form a handwriting stroke in the handwriting area.

In the method for displaying input content provided in this embodiment of this application, as shown in FIG. 12, before updating of an editing interface is completed, that is, before a HandView corresponding to a handwriting area is not generated, a web view (WebView) receives an input event on a handwriting picture, and the web view stores the received input event in a blocking queue, that is, the web view is an event generation sub-thread of the blocking queue. After the HandView corresponding to the handwriting area is generated, the canvas view (HandView) may receive and process the input event. The canvas view (HandView) is used as an event consumption sub-thread of the blocking queue to take out the input event in the blocking queue. The canvas views performs processing based on a time sequence of input events, and a handwriting trace is drawn based on the input events. In this way, loss of the handwriting input (for example, the 1^{st} stroke of the handwriting input) of the user on the handwriting picture can be avoided.

In a scenario in which the user directly performs a handwriting input on a handwriting picture, after a canvas view of a handwriting area is drawn, an input event corresponding to the received handwriting input can be processed by using the canvas view of the handwriting area, and a handwriting trace is drawn based on the input event, to generate handwriting input content. For example, as shown in FIG. 12, the web view receives the input event corresponding to the handwriting input on the handwriting picture, and stores, in the blocking queue, the input event corresponding to the handwriting input on the handwriting picture. After the canvas view of the handwriting area is drawn, the canvas view is used as the event consumption sub-thread to take out the input event in the blocking queue, and draw a handwriting trace based on the input event. It takes time to draw the canvas view of the handwriting area, resulting in a specific period of time from receiving the handwriting input (for example, the 1^{st} stroke of the handwriting input) of the user on the handwriting picture to generating a trace of the 1^{st} stroke of the handwriting input, thereby causing a problem of poor responsiveness of the 1^{st} stroke of the handwriting input of the user. In this case, user experience is that a writing trace of the 1^{st} stroke is displayed only after the 1^{st} stroke is completed for a period of time.

In the method for displaying input content provided in this embodiment of this application, the note application draws a transition layer in advance, and the transition layer is located at a top layer of an editing interface of the note application. Before a handwriting area is added to the editing interface (before a HandView corresponding to the handwriting area is successfully created), the transition layer is visible. A handwriting trace is drawn on the transition layer based on a handwriting input on a handwriting picture. In this way, before the handwriting area is successfully created, a trace corresponding to the handwriting input on the handwriting picture may be displayed on the screen through the transition layer. After the handwriting area is successfully created, the canvas view of the handwriting area can process an input event corresponding to the handwriting input. A handwriting trace is drawn on the canvas view based on the input event of the handwriting input, the transition layer is set to be invisible, and the handwriting trace drawn on the canvas view is displayed on the screen.

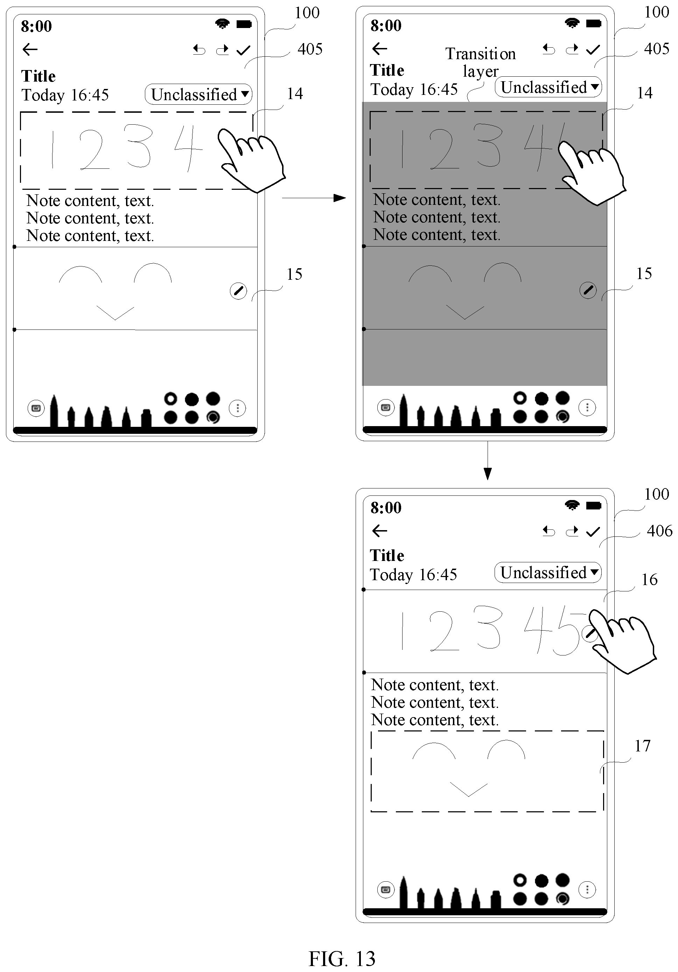

For example, as shown in FIG. 13, the tablet computer 100 displays the editing interface 405. The editing interface 405 includes the picture 14, and the picture 14 is a handwriting picture. The editing interface 405 further includes the handwriting area 15. In response to receiving a handwriting input of the user on the picture 14, the transition layer is set to be visible. The note application draws a handwriting trace on the transition layer based on the handwriting input on the picture 14, and the handwriting trace is displayed on the screen through the transition layer. In response to receiving the handwriting input of the user on the picture 14, the handwriting area 16 is added to the updated editing interface (the editing interface 406). After a canvas view corresponding to the handwriting area 16 is created, the note application performs handwriting trace drawing on the canvas view of the handwriting area based on the handwriting input. The transition layer is set to be invisible, and the handwriting trace may be displayed on the screen by using the canvas view of the handwriting area.

In this way, before the handwriting area is successfully created, the handwriting trace is drawn on the transition layer. After the handwriting area is successfully created, the transition layer is invisible, and the handwriting trace is drawn on the canvas view. Because the transition layer is drawn in advance, it takes short time to draw the handwriting trace on the transition layer, so that a time interval between when the user performs the handwriting input and when the display displays the handwriting trace can be effectively shortened. This improves responsiveness of the handwriting input of the user.

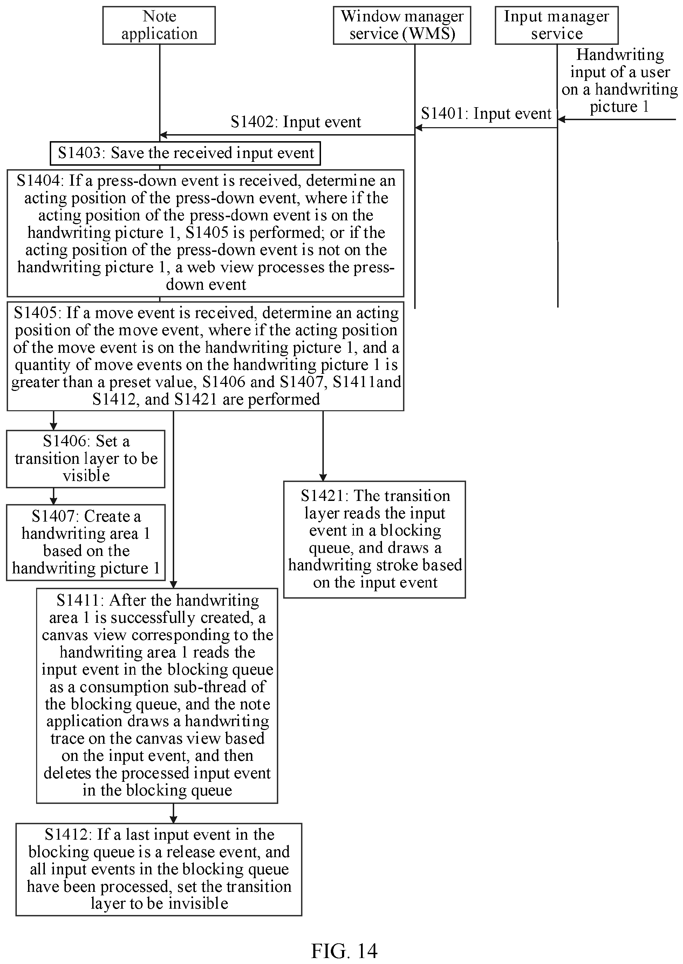

The scenario shown in FIG. 6 is used as an example. FIG. 14 is a schematic flowchart of a method for displaying input content according to an embodiment of this application when a user starts a handwriting input on a handwriting picture. As shown in FIG. 14, the method includes:

S1401: In response to a handwriting input of the user on a handwriting picture 1, an input manager service sends an input event to a window manager service.

When the user performs the handwriting input on the handwriting picture 1, the terminal device displays an editing interface 4. The editing interface 4 includes a text area 1 and the handwriting picture 1. The scenario shown in FIG. 6 is used as an example. The tablet computer 100 displays the editing interface 405, the editing interface 405 includes the picture 14, and the picture 14 is a handwriting picture. The editing interface 405 further includes the handwriting area 15.

For example, the input event may include a press-down (down) event, a release (up) event, a move (move) event, and the like. After a sensor driver detects a press-down operation, the sensor driver generates a down event, and sends the down event to the input manager service; and the input manager service sends the down event to the window manager service. After the sensor driver detects a release operation, a sensor driver generates an up event, and sends the up event to the input manager service; and the input manager service sends the up event to the window manager service. After the sensor driver detects a move operation, the sensor driver generates a move event, and sends the move event to the input manager service; and the input manager service sends the move event to the window manager service.

S1402: The window manager service sends the input event to a note application.

In an implementation, the window manager service determines, based on a window in which a focus is currently obtained, that a foreground application is a note application, and sends a tapping event to the note application for processing. In an example, the window manager service calls a function onTouchEvent, and sends the input event to the note application by using ViewRootlmpl.java in the function onTouchEvent.

S1403: The note application saves the received input event.

Each time the note application receives an input event, the note application calls a function obtainevent and saves the input event in a blocking queue.

In an implementation, a root node in a view tree structure corresponding to an activity corresponding to an editing interface of the note application receives the input event, and distributes the input event downward level by level based on levels in the view tree structure. In an example, the input event is sent to a web view (WebView) corresponding to a text area, and the web view (WebView) is used as an event generating sub-thread to store the input event in the blocking queue. In this way, before a handwriting area is successfully created, the input event corresponding to a handwriting input on a handwriting picture is stored in the blocking queue. After the handwriting area is successfully created, a canvas view (HandView) corresponding to the handwriting area may obtain the input event from the blocking queue, and draw a handwriting trace based on the input event, to avoid loss of the handwriting input (for example, a 1^{st} stroke of the handwriting input) on the handwriting picture.

In addition, one input action of the user on a display may include a plurality of input events. For example, a process in which the user inputs a segment of trace on the display through handwriting may include a down event, a plurality of move events, and an up event. A start point of an input segment of trace corresponds to a down event, and an end point of the input segment of trace corresponds to an up event. For example, a two-finger press-down action of the user on the display corresponds to two consecutive down events. For example, a two-finger dragging action of the user on the display corresponds to a down event, a move event, a down event, a move event, and the like. The note application saves an input event each time after receiving the input event, so that an input action of the user can be determined based on a plurality of input events.

S1404: If a press-down event is received, the note application determines an acting position of the press-down event, where if the acting position of the press-down event is on the handwriting picture 1, S1405 is performed; or if the acting position of the press-down event is not on the handwriting picture 1, the web view processes the press-down event.

In an example, the terminal device displays the editing interface 4 of the note application, the editing interface 4 includes the text area 1, and the text area 1 is implemented by using a web view (WebView) 1. The editing interface 4 further includes the handwriting picture 1, and the handwriting picture 1 is implemented by using an image file 1. Optionally, the image file 1 is a child node of the WebView 1. The editing interface 4 further includes a handwriting area 2, and the handwriting area 2 is implemented by using a canvas view (HandView) 3. In an example, the HandView 3 and the WebView 1 are both child nodes of a ViewContainer 1.

After receiving the press-down event, the note application calls a function getCurrentClickedImage to traverse handwriting pictures in the text area, to determine a specific handwriting picture on which the acting position of the press-down event is.

If it is determined that the acting position of the press-down event is on the handwriting picture, waiting for a move event continues, and S1405 is performed; or if it is determined that the acting position of the press-down event is not on the handwriting picture, the web view processes the press-down event.

S1405: If the move event is received, the note application determines an acting position of the move event, where If the acting position of the move event is on the handwriting picture 1, and a quantity of move events on the handwriting picture 1 is greater than a preset value, S1406 and S1407, S1411 and S1412, and S1421 are performed.

The note application determines the acting position of the move event. For example, the note application calls a function getCurrentClickedImage to traverse handwriting pictures in the text area, and determines a specific handwriting picture on which the acting position of the move event is.

If it is determined that the acting position of the move event is on the handwriting picture 1, a quantity of move events continuously received on the handwriting picture 1 is determined. If it is determined that the quantity of move events continuously received on the handwriting picture 1 is greater than the preset value (for example, the preset value is 2), S1406 and S1407, S1411 and S1412, and S1421 are performed. For example, a function onClickImageAtGraffitiMode is called to perform S1406 and S1407, S1411 and S1412, and S1421.

If it is determined that the acting position of the move event is not on the handwriting picture 1, the web view processes the move event.

S1406: The note application sets a transition layer to be visible.

The note application draws the transition layer in advance. In an implementation, a size of the transition layer is a size of an editing area on the editing interface. The transition layer is located above each layer of the editing interface.

The transition layer is set to be invisible by default. After one press-down event and a preset quantity of move events acting on the handwriting picture 1 are received, it indicates that the user performs a handwriting input on the handwriting picture 1, and the note application sets the transition layer to be visible (setSwitchSmoothHandWritingViewVisible). In this way, a handwriting trace drawn on the transition layer may be displayed on the screen.

S1407: The note application creates a handwriting area 1 based on the handwriting picture 1.

In an example, the note application calls a function switchHandWritingView to create the handwriting area 1. Optionally, the note application further generates a handwriting picture 2 based on the handwriting area 2. For example, in the scenario shown in FIG. 6, the handwriting area 16 is created based on the handwriting picture 14. Correspondingly, the handwriting picture 17 is generated based on the handwriting area 15.

In an implementation, the note application calls a function saveAndExitAsync to close a canvas view corresponding to the handwriting area 2 (the handwriting area 15), and calls a function addHandWritingLayout to create a canvas view corresponding to the handwriting area 1 (the handwriting area 16) based on the handwriting picture 1 (the picture 14). In an example, the note application may asynchronously close the canvas view corresponding to the second handwriting area and create the canvas view corresponding to the first handwriting area, that is, creating the canvas view corresponding to the first handwriting area may be performed without waiting for the action of closing the canvas view corresponding to the second handwriting area to be completed. Optionally, the note application further deletes an image file corresponding to the picture 1 (the picture 14), and generates an image file corresponding to the picture 2 (the picture 17) based on the handwriting area 2 (the handwriting area 15).

After the handwriting area 1 is successfully created, the canvas view corresponding to the handwriting area 1 can receive an input event corresponding to a handwriting input, and draw a handwriting stroke (handwriting input content) based on the handwriting input (the input event) of the user.

S1411: After the handwriting area 1 is successfully created, the canvas view corresponding to the handwriting area 1 reads the input event in the blocking queue as a consumption sub-thread of the blocking queue, and the note application draws a handwriting trace on the canvas view based on the input event, and then deletes the processed input event in the blocking queue.

In an example, after the handwriting area 1 is successfully created, that is, after a HandView corresponding to the handwriting area 1 is generated, the note application calls a function transferTouchEventsToHandWritingView, and in the function transferTouchEventsToHandWritingView, the HandView corresponding to the handwriting area 1 is used as a consumption sub-thread of the blocking queue to read the input event in the blocking queue (mTouchEventQueue). The HandView calls a function rawTransferredEvents to consume the input event. For example, the HandView draws a handwriting trace based on the input event. Then, the note application deletes the consumed input event from the blocking queue.

S1412: If a last input event in the blocking queue is a release event, and all input events in the blocking queue have been processed, the note application sets the transition layer to be invisible.

A release event is received, which indicates that drawing of a 1^{st} stroke is completed. If all the input events in the blocking queue are processed, that is, mTouchEventQueue is empty, it indicates that handwriting stroke drawing of all the handwriting inputs on the handwriting picture has been completed, that is, it indicates that no handwriting input is currently occurring. After the last input event in the blocking queue is the release event, and all the input events in the blocking queue have been processed, the handwriting area 1 has been successfully created, and the canvas view corresponding to the handwriting area 1 can process the input event, so that a handwriting trace is drawn based on the input event without losing the handwriting input of the user. The note application sets the transition layer to be invisible (setSwitchSmoothHandWritingViewInVisible), and a handwriting trace drawn on the canvas view corresponding to the handwriting area may be displayed on the screen.

S1421: The transition layer reads the input event in the blocking queue, and draws a handwriting stroke based on the input event.

In an example, the note application calls the function onTouchEvent, and in the function, the transition layer calls a function drawOneTransferredEvents to consume the input event. For example, the transition layer reads the input event in the blocking queue (at this time, the input event is not deleted from the blocking queue by the canvas view), and draws a handwriting stroke based on the input event.

It may be understood that because it takes long time to create the canvas view corresponding to the handwriting area 1, for a same input event in the blocking queue, time consumed by the canvas view is later than time consumed by the transition layer. Therefore, the transition layer is earlier than the canvas view to consume the input event. When the transition layer reads the input event in the blocking queue, the input event is not deleted in the blocking queue by the canvas view.

In addition, before the handwriting area 1 is created, a handwriting trace generated by the handwriting input is displayed on the screen through the transition layer. The transition layer is drawn in advance. Compared with drawing the handwriting stroke on the canvas view, drawing the handwriting trace on the transition layer brings a short delay, and brings good responsiveness experience to the user.

It may be understood that to implement the foregoing functions, the terminal device provided in embodiments of this application includes corresponding hardware structures and/or software modules for performing the functions. A person skilled in the art should be easily aware that units, algorithms, and steps in examples described with reference to embodiments disclosed in this specification can be implemented in embodiments of this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, module division in embodiments of this application is an example, and is merely logical function division. During actual implementation, there may be another division manner.

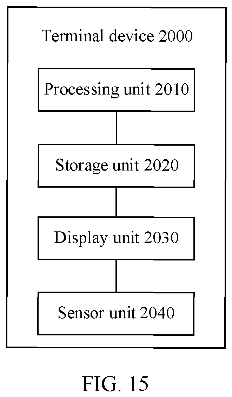

In an example, FIG. 15 is a diagram of a possible structure of the terminal device in the foregoing embodiments. The terminal device 2000 includes: a processing unit 2010, a storage unit 2020, a display unit 2030, and a sensor unit 2040.

The processing module 2010 is configured to control and manage an action of the terminal device 2000. The storage unit 2020 is configured to store program code and data of the terminal device 2000, and the processing unit 2010 calls the program code stored in the storage unit 2020 to perform the steps in the above method embodiments. The display unit 2030 is configured to display a user interface of the terminal device 2000, for example, an application interface of a note application. The sensor unit 2040 is configured to detect a user input, for example, detect a handwriting input of a user, and is further configured to detect a form change of the terminal device, for example, detect rotation, folding, and unfolding of the terminal device.

Certainly, unit modules in the terminal device 2000 include, but are not limited to, the processing unit 2010, the storage unit 2020, the display unit 2030, and the sensor unit 2040. For example, the terminal device 2000 may further include a communication unit, a power supply unit, an audio unit, and the like. The communication unit is configured to communicate, by the terminal device 2000, with another electronic device. The power supply unit is configured to supply power to the terminal device 2000. The audio unit is configured to play audio.

The processor 2010 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The storage unit 2020 may be a memory or the like. The display unit 2030 may be a display or the like. The sensor unit 2040 may include a touch sensor, a pressure sensor, an acceleration sensor, a gyroscope sensor, or the like.

For example, the processing unit 2010 is a processor (the processor 110 shown in FIG. 8), the storage unit 2020 may be a memory (the internal memory 121 shown in FIG. 8), the display unit 2030 may be a display (the display 192 shown in FIG. 8), and the sensor unit 2040 may be a sensor module (the sensor module 180 shown in FIG. 8). The terminal device 2000 provided in this embodiment of this application may be the terminal device 100 shown in FIG. 8. The processor, the memory, the display, the sensor, and the like may be connected together, for example, through buses. The processor calls the program code stored in the memory, to perform the steps in the foregoing method embodiments.

An embodiment of this application further provides a chip system. The chip system includes at least one processor and at least one interface circuit. The processor and the interface circuit may be interconnected through a line. For example, the interface circuit may be configured to receive a signal from another apparatus (for example, a memory of an electronic device). For another example, the interface circuit may be configured to send a signal to another apparatus (for example, the processor). For example, the interface circuit may read instructions stored in the memory, and send the instructions to the processor. When the instructions are executed by the processor, the electronic device is enabled to perform the steps in the foregoing embodiments. Certainly, the chip system may further include another discrete component. This is not specifically limited in embodiments of this application.

An embodiment of this application further provides a computer-readable storage medium. The computer-readable storage medium includes computer instructions. When the computer instructions are run on the foregoing electronic device, the electronic device is enabled to perform the functions or steps performed by the electronic device in the foregoing method embodiments.

An embodiment of this application further provides a computer program product. When the computer program product runs on a computer, the computer is enabled to perform the functions or steps performed by the terminal device in the foregoing method embodiments.

Based on the foregoing descriptions of the implementations, a person skilled in the art may clearly understand that for a purpose of convenient and brief description, division of the foregoing functional modules is merely used as an example for description. During actual application, the foregoing functions can be allocated to different functional modules for implementation based on a requirement, that is, an inner structure of an apparatus is divided into different functional modules, to implement all or some of the functions described above.

In the several embodiments provided in this application, it should be understood that the disclosed system, apparatus and method may be implemented in another manner. For example, the described apparatus embodiment is merely an example. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated. Parts displayed as a unit may be one physical unit or a plurality of physical units, may be located at one place, or may be distributed at different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for displaying input content, applied to an electronic device, wherein the method comprises:
displaying a first interface, wherein the first interface comprises a first text area, and the first text area comprises first text content;
in response to a first operation on a first option on the first interface, creating a first view to display a second interface, wherein the second interface comprises a first handwriting area and a second text area, the second text area comprises the first text content, and the first view corresponds to the first handwriting area;
in response to a first handwriting input in the first handwriting area, displaying first handwriting input content in the first handwriting area;
in response to a second operation on the second interface, deleting the first view to display a third interface, wherein the third interface comprises a first handwriting display area and a third text area, the first handwriting display area comprises the first handwriting input content, and the third text area comprises the first text content; and
in response to a third operation on the first handwriting display area of the third interface, creating a second view to display a fourth interface, wherein the fourth interface comprises the first handwriting area and the second text area, and the second view corresponds to the first handwriting area.

2. The method according to claim 1, wherein the third operation comprises a second handwriting input, and the method further comprises:
in response to the second handwriting input in the first handwriting display area of the third interface, displaying second handwriting input content in the first handwriting area of the fourth interface.

3. The method according to claim 2, wherein the method further comprises:
in response to the second handwriting input in the first handwriting display area of the third interface, setting a preset layer to be visible; and
after the second view is created, setting the preset layer to be invisible, wherein the fourth interface is generated based on the preset layer when the preset layer is visible.

4. The method according to claim 3, wherein the method further comprises:
in response to the second handwriting input in the first handwriting display area of the third interface, generating the second handwriting input content on the preset layer, wherein the preset layer is located above a layer on which the second view is located.

5. The method according to claim 4, wherein setting the preset layer to be invisible comprises:
when no handwriting input is occurring after the second handwriting input content is generated on the layer on which the second view is located, setting the preset layer to be invisible.

6. The method according to any one of claims 1 to 5, wherein the method further comprises:
when the second interface is displayed, deleting the first view in response to a form change of the electronic device; and
after the first view is deleted, creating a third view to display a fifth interface, wherein the fifth interface comprises a second handwriting area and a fourth text area, the third view corresponds to the second handwriting area, the second handwriting area comprises the first handwriting input content, and the fourth text area comprises the first text content.

7. The method according to claim 6, wherein
before deleting the first view in response to the form change of the electronic device, the method further comprises:
generating a first image based on the first view; and
creating the third view comprises:
generating the third view based on the first image and a screen display area after the form change of the electronic device.

8. The method according to any one of claims 1 to 7, wherein the method further comprises:
in response to the form change of the electronic device when the third interface is displayed, displaying a sixth interface, wherein the sixth interface comprises a second handwriting display area and a fifth text area, the second handwriting display area comprises the first handwriting input content, and the fifth text area comprises the first text content; and no view is deleted or no view is created in a process from the form change of the electronic device to displaying the sixth interface.

9. The method according to claim 1, wherein the third operation comprises a tapping operation, and the fourth interface is the same as the second interface.

10. The method according to any one of claims 1 to 9, wherein the method further comprises:
in response to the second operation on the second interface, creating a second image, wherein the second image corresponds to the first handwriting display area of the third interface.

11. The method according to any one of claims 1 to 10, wherein the third interface further comprises a third handwriting area, the third handwriting area comprises third handwriting input content, the fourth interface further comprises a third handwriting display area, the third handwriting display area comprises the third handwriting input content, and the method further comprises:
in response to the third operation on the first handwriting display area of the third interface, creating a third image, wherein the third image corresponds to the third handwriting display area.

12. The method according to any one of claims 1 to 11, wherein the first handwriting display area is a same display area as the first handwriting area on a screen.

13. The method according to any one of claims 1 to 12, wherein the first text content comprises at least one of a text, a picture, audio, a table, and a hyperlink.

14. The method according to any one of claims 1 to 13, wherein the second operation on the second interface comprises: a tapping operation on an area outside the first handwriting area of the second interface.

15. The method according to claim 7, wherein the form change comprises: rotating, folding, or unfolding.

16. An electronic device, comprising:
one or more processors;
display; and
a memory, wherein
the memory stores one or more computer programs, the computer programs comprise computer instructions, and when the instructions are executed by the processor, the electronic device is enabled to perform the method according to any one of claims 1 to 15.

17. A computer-readable storage medium, storing a computer program/instructions, wherein when the computer program/instructions are executed, the method according to any one of claims 1 to 15 is implemented.

18. A computer program product, comprising a computer program/instructions, wherein when the computer program/instructions are executed, the method according to any one of claims 1 to 15 is implemented.
